# EUROPÄISCHE PATENTSCHRIFT

(11) **EP 4 466 474 B1**
(45) Veröffentlichungstag und Bekanntmachung des Hinweises auf die Patenterteilung: **06.05.2026**
(21) Anmeldenummer: 23700721.6
(22) Anmeldetag: 11.01.2023
(51) Int. Cl.: F16H 63/34, F16H 63/44, F16H 63/48, F16H 63/30, B60K 1/00

(54) **KRAFTFAHRZEUG MIT EINEM KOPPELGETRIEBE UND MIT EINER FUNKTIONSGESICHERTEN PARKSPERRVORRICHTUNG**
MOTOR VEHICLE HAVING A COUPLING MECHANISM AND A FUNCTIONALLY SECURED PARKING LOCK DEVICE
VÉHICULE À MOTEUR DOTÉ D'UN MÉCANISME D'ACCOUPLEMENT ET D'UN DISPOSITIF DE VERROUILLAGE DE STATIONNEMENT FIXÉ FONCTIONNELLEMENT

(30) Priorität: 20.01.2022 DE 102022101279
(43) Veröffentlichungstag der Anmeldung: 27.11.2024
(73) Patentinhaber: Bayerische Motoren Werke Aktiengesellschaft, 80809 München (DE)
(72) Erfinder: ZELGER, Klaus, 82024 Taufkirchen (DE)
(86) Internationale Anmeldenummer: PCT/EP2023/050512
(87) Internationale Veröffentlichungsnummer: WO 2023/138962

(56) Entgegenhaltungen:
- CN-A- 108 644 371
- CN-A- 111 059 268
- DE-A1- 102011 088 669
- DE-A1- 102011 100 060
- JP-A- 2018 158 619
- KR-B1- 101 122 409

## Beschreibung

Die Erfindung betrifft ein Kraftfahrzeug mit wenigstens einer elektrischen Antriebsmaschine, zum Antreiben des Kraftfahrzeugs, mit wenigstens einem Koppelgetriebe, welches zumindest zwischen einer Koppelungsstellung, in welcher die elektrische Antriebsmaschine Drehmoment übertragend mit einem Antriebsrad des Kraftfahrzeugs gekoppelt ist, und einer Entkoppelungsstellung, in welcher die elektrische Antriebsmaschine von dem Antriebsrad entkoppelt ist, schaltbar ist, und mit einer Parksperrvorrichtung, welche zumindest ein Parksperrelement umfasst, das zwischen einer Parksperrstellung, in welcher das zumindest eine Parksperrelement eine Drehung des Antriebsrades zumindest mittelbar blockiert und einer Entsperrstellung, in welcher das zumindest eine Parksperrelement die Drehung des Antriebsrades freigibt, verlagerbar ist.

Anhand derartiger Koppelgetriebe ist es beispielsweise möglich, eine Drehmomentübertragung zwischen der elektrischen Antriebsmaschine und Antriebsrädern eines Kraftfahrzeugs bedarfsgerecht zu unterbrechen (Entkoppelungsstellung) und damit beispielsweise ein sogenanntes Segeln des Kraftfahrzeugs bei dessen Fahrbetrieb zu ermöglichen, sowie die Drehmomentübertragung herzustellen (Koppelungsstellung) um ein Antreiben der Antriebsräder mittels der Antriebsmaschine zu ermöglichen.

Parksperrvorrichtungen hingegen ermöglichen ein Sichern von Kraftfahrzeugen in deren geparktem Zustand gegen Wegrollen. Üblicherweise rastet hierzu eine Sperrklinke der Parksperrenvorrichtung formschlüssig in ein Parksperrenrad der Parksperrenvorrichtung ein.

Die DE 199 23 316 A1 beschreibt beispielsweise ein Antriebssystem für ein Kraftfahrzeug mit einer in einem Antriebsstrang mit einer Antriebswelle angeordneten Starter- und Generator-Einheit. Die Starter- und Generator-Einheit weist eine als elektrischer Motor mit Starterfunktion oder elektrischer Generator betreibbare elektrische Maschine und ein Planetengetriebe auf.

Die DE 10 2011 100 060 A1 betrifft einen Antriebsstrang eines Kraftfahrzeugs mit einer Parksperre zum selektiven Blockieren des Antriebsstrangs, mit einem Elektromotor, der einen Stator und einen Rotor umfasst, und mit einer angetriebenen Achse, die permanent mit dem Elektromotor antriebswirksam gekoppelt ist und die über eine Trennkupplung selektiv mit zumindest einem Rad des Kraftfahrzeugs antriebswirksam koppelbar ist. Die Parksperre und die Trennkupplung sind zumindest abschnittsweise, insbesondere vollständig in dem Rotor angeordnet.

Aus der KR 101 122 409 B1, auf welcher die zweiteilige Anspruchsfassung basiert, ist ein Getriebeuntersetzungsantriebssystem eines Elektromobils bekannt, das die Fahreigenschaften verbessert, indem es die Drehzahl des Antriebsmotors mittels eines Untersetzungsgetriebes reduziert. Hierbei dient ein Antriebsmotor als Antriebsquelle. Ein Untersetzungsgetriebe ist mit dem Antriebsmotor verbunden. Dieses Untersetzungsgetriebe reduziert die Drehzahl und gibt die Antriebsleistung ab. Ein Drehzahlumschalter ist in eine Seite des Untersetzungsgetriebes integriert.

Der CN 111 059 268 A ist eine Schalt- und Parkvorrichtung für ein Getriebe sowie ein zugehöriges Verfahren als bekannt zu entnehmen. Die Schalt- und Parkvorrichtung umfasst einen Antriebsmotor, eine Schalteinheit und eine Parkvorrichtung. Die Schalteinheit besteht aus einer Schaltnocke, einem Synchronring und einem Schaltverbindungsstück. Die Schaltnocke ist über das Schaltverbindungsstück mit dem Synchronring verbunden. Die Parkvorrichtung umfasst eine Parknocke, eine Parksperre und eine geriffelte Parkscheibe. Die Parknocke drückt die Parksperre nach unten, sodass diese in eine Zahnnut der geriffelten Parkscheibe eingreift und das Getriebe in Parkposition gebracht wird. Schalt- und Parknocke werden von derselben Welle angetrieben, die wiederum vom Antriebsmotor angetrieben wird. Durch die Formgebung und die koaxiale Anordnung von Schalt- und Parknocke kann das Schalten oder Parken mit nur einem Motor erfolgen.

Aufgabe der vorliegenden Erfindung ist es, ein Kraftfahrzeug mit einem Koppelgetriebe und einer Parksperrenvorrichtung bereitzustellen, welches auf verbesserte Weise bedienbar ist. Diese Aufgabe wird durch ein Kraftfahrzeug mit den Merkmalen des Patentanspruchs 1 gelöst. Vorteilhafte Ausgestaltungen mit zweckmäßigen Weiterbildungen der Erfindung sind in den Unteransprüchen angegeben.

Die Erfindung geht aus von einem Kraftfahrzeug mit wenigstens einer elektrischen Antriebsmaschine, zum Antreiben des Kraftfahrzeugs. Das Kraftfahrzeug umfasst des Weiteren wenigstens ein Koppelgetriebe, welches zumindest zwischen einer Koppelungsstellung, in welcher die elektrische Antriebsmaschine Drehmoment übertragend mit einem Antriebsrad des Kraftfahrzeugs gekoppelt ist, und einer Entkoppelungsstellung, in welcher die elektrische Antriebsmaschine von dem Antriebsrad entkoppelt ist, schaltbar ist.

Darüber hinaus umfasst das Kraftfahrzeug eine Parksperrvorrichtung, welche zumindest ein Parksperrelement umfasst, das zwischen einer Parksperrstellung, in welcher das zumindest eine Parksperrelement eine Drehung des Antriebsrades zumindest mittelbar blockiert und einer Entsperrstellung, in welcher das zumindest eine Parksperrelement die Drehung des Antriebsrades freigibt, verlagerbar ist. Das Koppelgetriebe kann vorzugsweise automatisiert zwischen der Koppelungsstellung und der Entkoppelungsstellung schaltbar sein.

Zudem ist vorgesehen, dass das Kraftfahrzeug wenigstens eine Betätigungsvorrichtung mit einem Aktuator umfasst, welche einerseits zum Betätigen einer, wenigstens ein Schaltelement aufweisenden Kupplung des Koppelgetriebes, die zum Schalten zwischen der Koppelungsstellung und der Entkoppelungsstellung dient, ausgebildet ist, und andererseits zum Verlagern des zumindest einen Parksperrelements zwischen der Parksperrstellung und der Entsperrstellung ausgebildet ist. Dies ist von Vorteil, da anhand der Betätigungsvorrichtung somit einerseits die Kupplung betätigt und dadurch das Schalten zwischen der Koppelungsstellung und der Entkoppelungsstellung bewirkt werden kann und andererseits anhand dieser Betätigungsvorrichtung auch das Verlagern zwischen der Parksperrstellung und der Entsperrstellung bewirkt werden kann. Der Betätigungsvorrichtung kommt somit zumindest eine Doppelfunktion zu, sodass das Kraftfahrzeug auf verbesserte Weise, nämlich unter besonders geringem Ansteuerungsaufwand und geringem baulichen Aufwand, bedient werden kann. Zudem kann insbesondere im Vergleich zu aus dem Stand der Technik bekannten Systemen Gewicht eingespart werden. Das Kraftfahrzeug kann beispielsweise ein Steuergerät umfassen, mittels welchem beispielsweise die Betätigungsvorrichtung ansteuerbar sein kann. Unter dem Ausdruck Antriebsrad kann vorliegend ein Antriebselement verstanden werden, welches direkten Kontakt zu einer Aufstandsfläche des Kraftfahrzeugs aufweist und dementsprechend zumindest eine Felge und einen mit dieser verbundenen Reifen aufweisen kann.

Des Weiteren ist vorgesehen, dass das Schaltelement so ausgestaltet ist, dass es einen Rückhaltebereich umfasst. welcher das zumindest eine Parksperrelement an der Verlagerung in die Parksperrstellung hindert, solange keine Einstellung der Koppelungsstellung vorliegt. Mit anderen Worten kann der Rückhaltebereich dazu ausgebildet und angeordnet sein, die Verlagerung in die Parksperrstellung erst freizugeben, wenn die Koppelungsstellung vorliegt und damit eingestellt wurde. Damit ist die Parksperrvorrichtung in besonders vorteilhafter Weise funktionsgesichert. Der Rückhaltebereich kann vorzugsweise einteilig mit dem Schaltelement verbunden sein. Der Rückhaltebereich kann in einer besonders einfachen und ausfallsicheren Variante eine Positionshaltekraft (Kraft zum Positionshalten des Sperrelements) auf das Sperrelement ausüben, um das zumindest eine Parksperrelement an der Verlagerung in die Parksperrstellung zu hindern, solange keine Einstellung der Koppelungsstellung vorliegt. Beispielsweise kann der Rückhaltebereich als, vorzugsweise nasenförmiger, Rückhaltevorsprung (Vorsprung, welcher zum Rückhalten ausgebildet ist) ausgebildet sein, welcher auf einen Sperrelement-Absatz des Sperrelements die Positionshaltekraft ausüben kann. Der Sperrelement-Absatz kann auch als Absatz des Sperrelements bezeichnet werden und vorzugsweise einteilig mit dem Sperrelement verbunden sein.

Der Erfindung liegt die Erkenntnis zugrunde, dass bei aus dem Stand der Technik bekannten Systemen für mehrere Funktionen auch eine entsprechende Anzahl an Stellmotoren eingesetzt werden, womit ein erhöhter Aufwand zur Ansteuerung der jeweiligen Stellmotoren zur Erfüllung der Funktionen verbunden ist. Die Erfindung setzt hier an und ermöglicht durch das Betätigen sowohl der Kupplung als auch des Parksperrelements durch die Betätigungsvorrichtung eine verbesserte Bedienung, insbesondere einen verbesserten Betrieb, des Kraftfahrzeugs.

Unter dem Ausdruck "zwischen der Koppelungsstellung und der Entkoppelungsstellung" kann verstanden werden, dass die Betätigungsvorrichtung zwar sowohl zum Schalten von der Koppelungsstellung in die Entkoppelungsstellung als auch zum (umgekehrten) Schalten von der Entkoppelungsstellung in die Koppelungsstellung ausgebildet sein und herangezogen werden kann. Dies muss jedoch nicht der Fall sein. Von dem Ausdruck "zwischen der Koppelungsstellung und der Entkoppelungsstellung" kann auch umfasst sein, dass entweder das Schalten von der Koppelungsstellung in die Entkoppelungsstellung oder das Schalten von der Entkoppelungsstellung in die Koppelungsstellung anhand der Betätigungsvorrichtung erfolgt.

Dies gilt analog auch für das Verlagern des Parksperrelements zwischen der Parksperrstellung und der Entsperrstellung. Die Betätigungsvorrichtung kann sowohl zum Verlagen von der Parkstellung in die Entsperrstellung und umgekehrt, also von der Entsperrstellung in die Parkstellung ausgebildet sein und dazu herangezogen werden. Denkbar ist jedoch auch, dass die Betätigungsvorrichtung entweder zum Verlagern des Parksperrelements von der Parksperrstellung in die Entsperrstellung oder umgekehrt, von der Entsperrstellung in die Parkstellung ausgebildet sein und herangezogen werden kann.

Der Aktuator kann also sowohl zum Betätigen des Schaltelements als auch zum Verlagern des Parksperrelements eingesetzt werden und angeordnet sein. Hierzu kann der Aktuator einerseits zumindest mittelbar mit dem Schaltelement und andererseits zumindest mittelbar mit dem Parksperrelement kraftübertragend gekoppelt sein.

Der Aktuator kann im Rahmen der vorliegenden Erfindung besonders bevorzugt als Elektromotor ausgebildet sein. Der Elektromotor kann besonders aufwandsarm aus einem Bordnetz des Kraftfahrzeugs mit elektrischer Energie versorgt werden.

Denkbar ist jedoch prinzipiell auch eine Ausgestaltung des Aktuators als Pneumatikvorrichtung oder als Hydraulikvorrichtung, sodass beispielsweise die Betätigung der Kupplung sowie das Verlagern zwischen der Parksperrstellung und der Entsperrstellung durch Versorgung des Aktuators mit Druckluft bzw. Hydraulikflüssigkeit bewirkt werden kann. Die Ausgestaltung des Aktuators als Pneumatikvorrichtung (pneumatisch arbeitende Vorrichtung) oder als Hydraulikvorrichtung (hydraulisch arbeitende Vorrichtung) kann von Vorteil sein, um eine von einem elektrischen Energiespeicher und damit von dem Bordnetz des Kraftfahrzeugs unabhängige und damit besonders ausfallsichere Betätigung und/oder Notbetätigung des Schaltelements und des Parksperrelements zu ermöglichen, indem die Pneumatikvorrichtung bzw. Hydraulikvorrichtung beispielsweise über einen entsprechenden Druckspeicher mit Energie versorgt wird.

Zudem ist gemä der vorliegenden Erfindung vorgesehen, dass der Aktuator zur Erzeugung einer, insbesondere in genau eine Drehrichtung orientierten, Drehbewegung ausgebildet ist, mittels welcher sowohl die Kupplung betätigbar als auch das Parksperrelement verlagerbar ist. Eine derartige Drehbewegung ermöglicht im Gegensatz zu einer Linearbewegung eine besonders platzsparende Betätigung bzw. Verlagerung.

Mittels des Schaltelements kann die Kupplung geschaltet werden. So kann mittels des Schaltelements beispielsweise wenigstens ein Kupplungselement der Kupplung relativ zu einem anderen Kupplungselement der Kupplung bewegt und dadurch die Kupplung geschaltet werden.

Die Kupplung kann vorzugsweise als Formschlusskupplung ausgebildet sein. Unter der Formschlusskupplung ist eine Kupplung zu verstehen, bei welcher in der Koppelungsstellung eine Übertragung von Drehmoment durch formschlüssiges Ineinandergreifen, also durch Formschluss der jeweiligen Kupplungselemente der Kupplung erfolgt. Anders als bei Kupplungen, welche Drehmoment durch Reibschluss übertragen, also Reibkupplungen, wie beispielsweise Lamellenkupplungen oder Rutschkupplungen, ist bei Formschlusskupplungen in vorteilhafter Weise keine Haltekraft nötig, um die Übertragung des Drehmoments aufrecht zu erhalten. Darüber hinaus tritt bei Formschlusskupplungen auch kein Schlupf zwischen den jeweiligen Kupplungselementen auf, über welche in der Koppelungsstellung Drehmoment übertragbar ist, bzw. übertragen wird. Dies trägt zur Effizienzsteigerung bei und ermöglicht insgesamt einen aufwandsarmen Betrieb des Koppelgetriebes und damit auch des Kraftfahrzeugs.

Bevorzugt kann ausschließlich durch Schalten von der Entkoppelungsstellung in die Koppelungsstellung die Drehmoment übertragende Koppelung zwischen der elektrischen Antriebsmaschine und dem Antriebsrad hergestellt werden. Es kann also vorgesehen sein, dass das Kraftfahrzeug keine weiteren Kupplungen umfasst, welche zur Drehmomentübertragung zwischen dem Antriebsrad und der elektrischen Antriebsmaschine zwischengeschaltet sind.

In vorteilhafter Weise kann die elektrische Antriebsmaschine in der Koppelungsstellung über das wenigstens eine Koppelgetriebe differenzialgetriebelos, also mit anderen Worten ohne Zwischenschaltung eines Differenzialgetriebes des Kraftfahrzeugs und damit differenzialgetriebefrei Drehmoment übertragend mit dem Antriebsrad gekoppelt sein. Die elektrische Antriebsmaschine kann über das Koppelgetriebe somit zum Einzelradantrieb des Antriebsrades mit dem Antriebsrad gekoppelt werden.

Vorzugsweise kann vorgesehen sein, dass das Kraftfahrzeug eine Mehrzahl an Antriebsrädern, Koppelgetrieben und elektrischen Antriebsmaschinen umfasst. So kann jedem der Antriebsräder jeweils wenigstens ein Koppelgetriebe und wenigstens eine elektrische Antriebsmaschine zugeordnet sein. Weist das Kraftfahrzeug also beispielsweise einen Vierradantrieb auf, so kann das Kraftfahrzeug vier Antriebsräder, vier elektrische Antriebsmaschinen und vier Koppelgetriebe umfassen. Dadurch können beispielsweise die jeweiligen, einem Vorderwagen, also der Front des Kraftfahrzeugs zugeordneten, vorderen Antriebsräder durch Schalten der diesen vorderen Antriebsrädern zugeordneten (vorderen) Koppelgetriebe und Einstellen der Entkoppelungsstellung entkoppelt werden, wohingegen die einem Hinterwagen, also dem Heck des Kraftfahrzeugs zugeordneten, hinteren Antriebsräder durch Schalten der (hinteren) Koppelgetriebe und Einstellen der Koppelungsstellung gekoppelt und damit zum Antreiben des Kraftfahrzeugs genutzt werden. In diesem beispielhaften Fall befinden sich die vorderen Antriebsräder in einem sogenannten "Segelbetrieb" und werden im Gegensatz zu den hinteren Antriebsrädern nicht zum Antreiben des Kraftfahrzeugs genutzt. Denkbar ist selbstverständlich auch, dass die vorderen Antriebsräder zum Antreiben des Kraftfahrzeugs genutzt werden und sich die hinteren Antriebsräder im Segelbetrieb befinden.

Besonders bevorzugt kann das Koppelgetriebe als zwischen der Koppelungsstellung und der Entkoppelungsstellung schaltbare Zahnradstufe, insbesondere Zwischenzahnradstufe, ausgebildet sein. Dies gestattet eine einfache Integration in ein Getriebe, insbesondere Stirnradgetriebe, des Kraftfahrzeugs. Das Getriebe kann vorzugsweise als Automatikgetriebe ausgestaltet sein. Das Koppelgetriebe kann somit bevorzugt in ein Stirnradgetriebe des Kraftfahrzeugs integriert sein. Dies ist von Vorteil, da das Koppelgetriebe dadurch besonders bauraumsparend angeordnet und in einem Gehäuse des Stirnradgetriebes aufgenommen sein kann. Vorzugsweise kann das Koppelgetriebe als Zwischenzahnradstufe des Stirnradgetriebes ausgebildet sein.

Des Weiteren ist gemäß der vorliegenden Erfindung vorgesehen, dass die wenigstens eine Betätigungsvorrichtung ein mittels des Aktuators verstellbares Betätigungselement umfasst, welches einerseits zum Ausüben zumindest einer Schaltkraft auf das Schaltelement zum Betätigen der Kupplung und andererseits zum Ausüben wenigstens einer Verlagerungskraft, zum Verlagern des zumindest einen Parksperrelements zwischen der Parksperrstellung und der Entsperrstellung ausgebildet ist. Dies ist von Vorteil, da das Betätigungselement damit eine Doppelfunktion erfüllt, sodass insbesondere auf ein Vorsehen von weiteren Betätigungselementen verzichtet und dadurch Gewicht eingespart werden kann. Das Betätigungselement kann bevorzugt zumindest bereichsweise oder vollständig als Welle ausgebildet sein, welche drehfest mit einer Rotorwelle des Aktuators verbunden oder als Rotorwelle des Aktuators ausgebildet sein kann.

Bevorzugt kann das Schaltelement drehbar mit dem Betätigungselement verbunden sein, insbesondere drehbar an dem Betätigungselement gelagert sein. Dies ist von Vorteil, da das Betätigungselement somit auch zur Lagerung des Schaltelements herangezogen werden kann, sodass auf ein entsprechendes, zusätzliches Lager verzichtet und damit Gewicht eingespart werden kann.

Gemäß der Erfindung ist vorgesehen, dass das wenigstens eine Betätigungselement über ein zweites Federelement der Betätigungsvorrichtung kraftübertragend zumindest mittelbar, bevorzugt unmittelbar, mit einem Exzenterelement der Betätigungsvorrichtung gekoppelt ist, mittels welchem das Parksperrelement zwischen der Parksperrstellung und der Entsperrstellung verlagerbar ist. Dies ist von Vorteil, da das zweite Federelement beim Ausüben der Verlagerungskraft mittels des Betätigungselements vorgespannt werden kann, sodass die Verlagerungskraft dementsprechend dauerhaft auf das Exzenterelement wirken kann. Hierdurch kann ein besonders verzögerungsarmes Betätigen des Exzenterelements erzielt werden und infolgedessen beispielsweise ein besonders verzögerungsarmes Verlagern des Parksperrelements, beispielsweise von der Entsperrstellung in die Parksperrstellung, erzielt werden, sobald dies mechanisch möglich ist. Dies kann beispielsweise dann mechanisch möglich sein, wenn eine Drehgeschwindigkeit eines Parksperrenrades der Parksperrvorrichtung einen ausreichend kleinen Drehgeschwindigkeitswert aufweist, sodass das Parksperrelement, welches beispielsweise als Parksperrenklinke ausgebildet sein kann, in das Parksperrenrad einrasten und dadurch die Parksperrstellung eingestellt werden kann.

Das zweite Federelement kann als Drehfeder ausgebildet sein. Dadurch kann eine Einstellung eines Federweges des zweiten Federelements infolge des Ausübens der Verlagerungskraft nicht nur besonders platzsparend, insbesondere ohne axiale Längenänderung, erfolgen. Ein weiterer Vorteil besteht darin, dass das Betätigungselement und/oder das Exzenterelement zumindest bereichsweise in eine Federelementöffnung des zweiten Federelements eingeführt sein kann, sofern das zweite Federelement als Drehfeder ausgebildet ist. Dadurch kann das Betätigungselement und/oder das Exzenterelement eine weitere Funktion übernehmen, nämlich die Funktion des besonders verliersicheren Haltens des zweiten Federelements.

Vorzugsweise kann das Exzenterelement als Nocke ausgebildet sein, durch welche bereits bei einer geringen Drehung der Nocke ein großer Nockenhub zum Verlagern des Parksperrelements umgesetzt werden kann. Alternativ dazu kann das Exzenterelement auch beispielsweise als exzentrisch, also außerhalb einer Mittelachse des Exzenterelements, gelagerte Kreisscheibe ausgebildet sein. Eine derartige Kreisscheibe ist nicht nur besonders aufwandsarm herstellbar, sondern ermöglicht zudem ein besonders gleichmäßiges Verlagern ohne sprunghafte Wegänderungen.

In einer vorteilhaften Weiterbildung der Erfindung ist vorgesehen, dass die Betätigungsvorrichtung dazu ausgebildet ist, einen Freigabezustand einzustellen, bei welchem die Entkoppelungsstellung geschaltet und gleichzeitig das Parksperrelement in der Entsperrstellung verlagert gehalten ist. Dies ist von Vorteil, da in dem Freigabezustand beispielsweise ein sogenanntes "Segeln" des Kraftfahrzeugs ermöglicht ist. So kann sichergestellt werden, dass Bewegungsenergie des Kraftfahrzeugs zu dessen Fortbewegung genutzt wird, anstatt zumindest Teile der Bewegungsenergie durch einen Schleppbetrieb der elektrischen Antriebsmaschine zu verlieren. Bevorzugt hält der Aktuator dabei sowohl die Entkoppelungsstellung als auch gleichzeitig die Entsperrstellung aufrecht, wodurch ein hohes Maß an Funktionssicherheit erzielt werden kann, zumal der Aktuator zur Aufrechterhaltung beider Stellungen, also sowohl der Entkoppelungsstellung als auch der Entsperrstellung, genutzt werden kann.

In einer weiteren vorteilhaften Weiterbildung der Erfindung ist vorgesehen, dass die Betätigungsvorrichtung dazu ausgebildet ist, einen Antriebsschaltzustand einzustellen, bei welchem die Koppelungsstellung geschaltet und gleichzeitig das Parksperrelement in der Entsperrstellung verlagert gehalten ist. Dies ist von Vorteil, da bei dem Antriebsschaltzustand das Antreiben des Kraftfahrzeugs durch Koppelung der elektrischen Antriebsmaschine über das Koppelgetriebe mit dem Antriebsrad sichergestellt und gleichzeitig das Parksperrelement offen und damit in der Entsperrstellung gehalten ist. Bevorzugt hält der Aktuator dabei sowohl die Koppelungsstellung als auch gleichzeitig die Entsperrstellung aufrecht, wodurch ein hohes Maß an Funktionssicherheit erzielt werden kann, zumal der Aktuator zur Aufrechterhaltung beider Stellungen, also sowohl der Koppelungsstellung als auch der Entsperrstellung, genutzt werden kann.

In einer weiteren vorteilhaften Weiterbildung der Erfindung ist vorgesehen, dass die Betätigungsvorrichtung dazu ausgebildet ist, einen Blockierschaltzustand einzustellen, bei welchem die Koppelungsstellung geschaltet und gleichzeitig das Parksperrelement in der Parksperrstellung verlagert gehalten ist. Dies ist von Vorteil, da das Antriebsrad bei dem Blockierschaltzustand sowohl mittels der elektrischen Antriebsmaschine als auch mittels der Parksperrvorrichtung gehalten werden kann, sodass ein unerwünschtes Wegrollen des Kraftfahrzeugs besonders wirksam vermieden werden kann. Bevorzugt hält der Aktuator dabei sowohl die Koppelungsstellung als auch gleichzeitig die Parksperrstellung aufrecht, wodurch ein hohes Maß an Funktionssicherheit erzielt werden kann, zumal der Aktuator zur Aufrechterhaltung beider Stellungen, also sowohl der Koppelungsstellung als auch der Sperrstellung, genutzt werden kann.

Somit kann anhand der Betätigungsvorrichtung, insbesondere anhand des Aktuators der Betätigungsvorrichtung, wahlweise der Freigabezustand, der Antriebsschaltzustand oder der Blockierschaltzustand einstellbar sein. Hierdurch kann ein besonders hohes Maß an Funktionssicherheit erzielt werden, zumal auf besonders wirksame Weise eine Situation vermieden werden kann, in welcher die Parksperrvorrichtung geschlossen, also das Parksperrelement in der Parksperrstellung verlagert gehalten und gleichzeitig die Entkoppelungsstellung geschaltet ist.

In einer weiteren vorteilhaften Weiterbildung der Erfindung ist vorgesehen, dass das wenigstens eine Betätigungselement über ein erstes Federelement der Betätigungsvorrichtung kraftübertragend zumindest mittelbar, bevorzugt unmittelbar, mit dem wenigstens einen Schaltelement der Kupplung gekoppelt ist. Dies ist von Vorteil, da das erste Federelement beim Ausüben der Schaltkraft mittels des Betätigungselements vorgespannt werden kann, sodass die Schaltkraft dementsprechend dauerhaft auf das Schaltelement wirken kann. Hierdurch kann ein besonders verzögerungsarmes Betätigen der Kupplung erzielt werden und infolgedessen beispielsweise ein besonders verzögerungsarmes Schalten von der Entkoppelungsstellung in die Koppelungsstellung erzielt werden, sobald dies mechanisch, beispielsweise infolge einer Drehzahlgleichheit jeweiliger Zahnräder des Koppelgetriebes, möglich ist. Um die Kupplung zu betätigen, kann die Schaltkraft auf das Schaltelement der Kupplung ausgeübt werden. Das Schaltelement kann dadurch bewegt werden und zumindest ein Kupplungselement der Kupplung verstellen, um dadurch das Schalten zwischen der Koppelungsstellung und der Entkoppelungsstellung zu bewirken.

Das erste Federelement kann als Drehfeder ausgebildet sein. Dadurch kann eine Einstellung eines Federweges des ersten Federelements infolge des Ausübens der Schaltkraft nicht nur besonders platzsparend, insbesondere ohne axiale Längenänderung, erfolgen. Ein weiterer Vorteil besteht darin, dass das Betätigungselement und/oder das Schaltelement zumindest bereichsweise in eine Federelementöffnung des ersten Federelements eingeführt sein kann, sofern das erste Federelement als Drehfeder ausgebildet ist. Dadurch kann das Betätigungselement und/oder das Schaltelement eine weitere Funktion übernehmen, nämlich die Funktion des besonders verliersicheren Haltens des ersten Federelements.

In einer weiteren vorteilhaften Weiterbildung der Erfindung ist vorgesehen, dass das Betätigungselement mittels des Aktuators in eine Drehrichtung drehbar ist, wodurch sowohl die zumindest eine Schaltkraft über das erste Federelement auf das Schaltelement als auch die wenigstens eine Verlagerungskraft über das zweite Federelement auf das Exzenterelement ausübbar ist. Dies ist von Vorteil, da bei der Drehung in die, insbesondere genaue eine, Drehrichtung somit sowohl das Schaltelement als auch das Exzenterelement betätigt werden können. Damit ist eine aufwandsarme und insbesondere funktionssichere Abstimmung und Anordnung der beteiligten Komponenten, insbesondere des Betätigungselements, des Schaltelements und des Exzenterelements aufeinander derart geschaffen, dass eine unerwünschte, oder sogar sicherheitskritische Situation ausgeschlossen werden kann, in welcher sich beispielsweise das Parksperrelement in der Parksperrstellung befindet und gleichzeitig die Entkoppelungsstellung eingestellt ist. Dies trägt in erheblichem Maße zu einer hohen Funktionssicherheit des Kraftfahrzeugs bei.

In einer weiteren vorteilhaften Weiterbildung der Erfindung ist vorgesehen, dass das Betätigungselement einen Schaltelementanschlag aufweist, mittels welchem eine Bewegung des Schaltelements relativ zu dem Betätigungselement begrenzbar ist und/oder das Betätigungselement einen Exzenterelementanschlag aufweist, mittels welchem eine Bewegung des Exzenterelements relativ zu dem Betätigungselement begrenzbar ist. Dies ist von Vorteil, da hierdurch eine besonders aufwandsarme Einstellung einer Endlagenpositionierung des Schaltelements und/oder des Exzenterelements an dem Betätigungselement erzielt werden kann, wobei das Schaltelement an dem Schaltelementanschlag und das Exzenterelement an dem Exzenterelementanschlag in Anlage gebracht werden kann. Mittels des Schaltelementanschlags und/oder des Exzenterelementanschlags kann insbesondere eine Drehung des Schaltelements und/oder des Exzenterelements relativ zu dem Betätigungselement begrenzt werden. Das Schaltelement kann einen mit dem Schaltelementanschlag zusammenwirkenden, also korrespondierenden schaltelementseitigen Anschlag aufweisen, welcher bei der Begrenzung der Bewegung des Schaltelements relativ zu dem Betätigungselement mit dem Schaltelementanschlag in Anlage stehen kann. Das Exzenterelement kann hingegen einen mit dem Exzenterelementanschlag zusammenwirkenden, also korrespondierenden exzenterelementseitigen Anschlag aufweisen, welcher bei der Begrenzung der Bewegung des Exzenterelements relativ zu dem Betätigungselement mit dem Exzenterelementanschlag in Anlage stehen kann.

In einer weiteren vorteilhaften Weiterbildung der Erfindung umfasst das Koppelgetriebe ein erstes Zahnrad, welches in zumindest mittelbarem Eingriff mit der Antriebsmaschine steht, sowie ein anhand der Kupplung mit dem ersten Zahnrad Drehmoment übertragend koppelbares, zweites Zahnrad, welches zumindest mittelbar drehfest mit dem Antriebsrad gekoppelt ist. Dies ist von Vorteil, da das Koppelgetriebe dadurch besonders einfach und robust aufgebaut ist und damit eine besonders geringe Störanfälligkeit aufweist. Unter dem Ausdruck mittelbar ist allgemein zu verstehen, dass weitere Drehmoment übertragende Elemente zwischengeschaltet sein können. Das jeweilige Zahnrad kann beispielsweise über eine Welle (als derartiges Drehmoment übertragendes Element) und dadurch mittelbar mit der Antriebsmaschine bzw. dem Antriebsrad gekoppelt sein. Unter dem Ausdruck drehfest ist allgemein zu verstehen, dass eine Relativdrehung zwischen drehfest miteinander gekoppelten Komponenten, beispielsweise Welle und Zahnrad, unterbunden ist. Zudem umfasst die Kupplung ein erstes Kupplungselement, welches zumindest mittelbar drehfest über ein drehfest mit dem ersten Zahnrad verbundenes, zweites Kupplungselement der Kupplung mit dem ersten Zahnrad gekoppelt ist. Dies ist von Vorteil, da die Kupplung damit einen besonders einfachen und robusten Aufbau aufweist. Unter dem Ausdruck mittelbar ist zu verstehen, dass sowohl das jeweilige Kupplungselement als auch das jeweilige Zahnrad drehfest beispielsweise mit einer entsprechenden Welle verbunden sein können, wodurch dann das Kupplungselement mittelbar, nämlich beispielsweise mittels der Welle mit dem Zahnrad gekoppelt sein kann. Weiterhin umfasst die Kupplung ein Verbindungselement, welches einerseits zumindest mittelbar mit dem zweiten Zahnrad gekoppelt und andererseits zumindest mittelbar, insbesondere durch Einstellung der Koppelungsstellung, drehfest mit dem ersten Kupplungselement koppelbar ist. Dies ist von Vorteil, da das Verbindungselement eine besonders einfache Ausgestaltung des ersten Kupplungselements gestattet. Das Verbindungselement kann reversibel lösbar, also mit anderen Worten zerstörungsfrei lösbar, beispielsweise mittels einer Passverzahnung, welche auch als Steckverzahnung bezeichnet werden kann, zumindest mittelbar mit dem zweiten Zahnrad gekoppelt sein. Das Verbindungselement kann vorzugsweise als Muffe, insbesondere Festmuffe, ausgebildet sein.

In einer weiteren vorteilhaften Weiterbildung der Erfindung umfasst die Kupplung ein Sperrelement. Das Sperrelement ist zum Unterbinden des Schaltens von der Entkoppelungsstellung in die Koppelungsstellung bei einem Drehzahlunterschied zwischen dem ersten Zahnrad und dem zweiten Zahnrad ausgebildet. Darüber hinaus ist das Sperrelement zur Freigabe einer das Schalten von der Entkoppelungsstellung in die Koppelungsstellung bewirkenden Relativbewegung zwischen dem ersten Kupplungselement und dem zweiten Kupplungselement bei Drehzahlgleichheit zwischen dem ersten Zahnrad und dem zweiten Zahnrad ausgebildet. In vorteilhafter Weise verhindert das Sperrelement damit übermäßige mechanische Belastungen, insbesondere ein Aufeinanderschlagen der Kupplungselemente, sowie unerwünschte Geräusche welche ansonsten bei einem (unbeabsichtigten) Schalten in die Koppelungsstellung bei Drehzahlunterschied auftreten könnten.

In einer weiteren vorteilhaften Weiterbildung der Erfindung ist vorgesehen, dass das Schaltelement in der Koppelungsstellung und/oder in der Entkoppelungsstellung zumindest bereichsweise in eine radial innerhalb einer Verzahnung wenigstens eines der Zahnräder angeordnete Zahnradausnehmung eingeführt ist und mit dem ersten Kupplungselement in Eingriff ist. Dies ist von Vorteil, durch das zumindest bereichsweise Anordnen des Schaltelements in der Zahnradausnehmung eine besonders platzsparende Anordnung geschaffen ist. Dadurch, dass das Schaltelement in der Zahnradausnehmung mit dem ersten Kupplungselement in Eingriff ist, ergibt sich ein besonders vorteilhafter Kraftfluss mit besonders wenigen Umlenkungen und dementsprechend geringen mechanischen Spannungen und/oder Belastungsspitzen. Besonders bevorzugt kann das erste Kupplungselement sowohl in der Koppelungsstellung als auch in der Entkoppelungsstellung radial innerhalb der Zahnradausnehmung angeordnet sein, wodurch sich eine entsprechend besonders vorteilhafte Anordnung in Bezug auf den Kraftfluss ergibt. Um die Kupplung zu betätigen, kann die Schaltkraft beispielsweise auf das Schaltelement der Kupplung ausgeübt und über das Schaltelement auf das erste Kupplungselement übertragen werden. Die Zahnradausnehmung kann auch als Ausnehmung des Zahnrades bezeichnet werden, wobei diese Ausnehmung in Radialerstreckungsrichtung weiter innen liegt, als die Verzahnung des Zahnrades.

Das Schaltelement kann wenigstens einen ersten Elementarmabschnitt und einen unmittelbar mit dem ersten Elementarmabschnitt verbundenen sowie einen Winkel mit dem ersten Elementarmabschnitt einschließenden, zweiten Elementarmabschnitt aufweisen, wobei einer der Elementarmabschnitte in die Zahnradausnehmung eingeführt und mit der Kupplung gekoppelt sein kann, und der andere Elementarmabschnitt drehbar zumindest mittelbar, bevorzugt unmittelbar, mit der Betätigungsvorrichtung gekoppelt sein kann. Dieser Aufbau gestattet eine besonders platzsparende Betätigung der Kupplung.

In einer weiteren vorteilhaften Weiterbildung der Erfindung ist vorgesehen, dass das Schaltelement als Schaltschwinge oder als Schaltgabel ausgebildet ist. Dies ist von Vorteil, da sowohl Schaltschwingen als auch Schaltgabeln besonders robuste Formen von Schaltelementen darstellen. Um die Kupplung zu betätigen, kann die Schaltkraft beispielsweise auf das Schaltelement der Kupplung ausgeübt werden. Das Schaltelement kann vorzugsweise drehbar mit der Betätigungsvorrichtung gekoppelt sein, insbesondere drehbar an der Betätigungsvorrichtung gelagert sein.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen, welcher durch die nachfolgenden Ansprüche definiert wird.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen.

Im Folgenden ist die Erfindung noch einmal anhand eines konkreten Ausführungsbeispiels erläutert. Hierzu zeigt:
- Fig. 1: eine schematische Perspektivansicht eines Stirnradgetriebes, welches ein Koppelgetriebe umfasst und mit einer elektrischen Antriebsmaschine gekoppelt ist, die zum Antreiben eines Antriebsrades eines stark abstrahiert dargestellten Kraftfahrzeugs dient, wobei das Kraftfahrzeug eine Parksperrvorrichtung, eine Kupplung zum Schalten des Koppelgetriebes sowie eine Betätigungsvorrichtung umfasst;
- Fig. 2: eine Draufsicht auf das Koppelgetriebe, die elektrische Antriebsmaschine, die Parksperrvorrichtung, die Kupplung sowie die Betätigungsvorrichtung;
- Fig. 3: eine Schnittdarstellung gemäß einer in Fig. 2 gezeigten Schnittebene A;
- Fig. 4: eine weitere Schnittdarstellung gemäß einer in Fig. 2 gezeigten Schnittebene B;
- Fig. 5: eine weitere Schnittdarstellung gemäß einer in Fig. 2 gezeigten Schnittebene C; und
- Fig. 6: eine weitere schematische Perspektivansicht des Koppelgetriebes, wobei ein Schaltelement der Kupplung einen Rückhaltebereich umfasst, welcher das zumindest eine Parksperrelement an der Verlagerung in die Parksperrstellung hindert, solange keine Einstellung der Koppelungsstellung vorliegt.

Nachfolgend sind gleiche und funktionsgleiche Elemente mit den gleichen Bezugszeichen versehen.

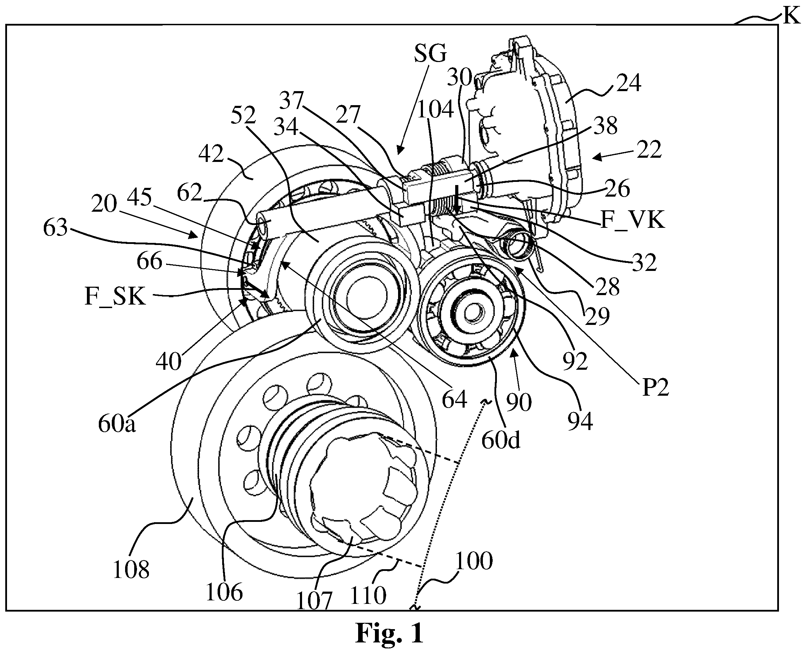

Fig. 1 zeigt in einer schematischen Perspektivansicht ein Kraftfahrzeug K, welches elektrische Antriebsmaschinen 10, Stirnradgetriebe SG mit Koppelgetrieben 20 und Antriebsrädern 100 umfasst. Dabei ist jedem der Stirnradgetriebe SG jeweils eines der Koppelgetriebe 20 zugeordnet. Mit anderen Worten ist jeweils eines der Koppelgetriebe 20 in jeweils eines der Stirnradgetriebe SG des Kraftfahrzeugs K integriert.

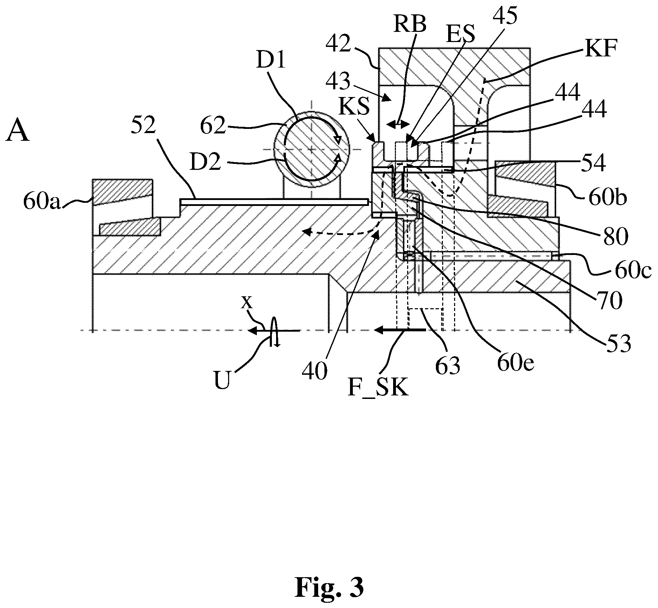

Jede der Antriebsmaschinen 10 ist mit jeweils einem der Stirnradgetriebe SG gekoppelt. Jedes der Stirnradgetriebe SG ist darüber hinaus mit jeweils einem der Antriebsräder 100 koppelbar, indem das jeweilige Koppelgetriebe 20 des jeweiligen Stirnradgetriebes SG von einer Entkoppelungsstellung ES in eine Koppelungsstellung KS geschaltet wird. Die Entkoppelungsstellung ES sowie die Koppelungsstellung KS sind exemplarisch anhand von Fig. 3 zu erkennen. In der Koppelungsstellung KS ist das jeweilige Antriebsrad 100 Drehmoment übertragend mit der jeweiligen Antriebsmaschine 10 gekoppelt, wohingegen die Drehmomentübertragung zwischen Antriebsrad 100 und Antriebsmaschine 10 in der Entkoppelungsstellung ES unterbrochen ist. Mit anderen Worten ist die jeweilige elektrische Antriebsmaschine 10 in der Entkoppelungsstellung ES des jeweiligen Koppelgetriebes 20 von dem jeweiligen Antriebsrad 100 entkoppelt. Insgesamt ist dadurch ein selektives Antreiben der jeweiligen Antriebsräder 100, mithin ein Einzelradantrieb jedes der Antriebsräder 100 ermöglicht. Damit ist also jedes der Antriebsräder 100 durch die diesem jeweils zugeordnete elektrische Antriebsmaschine 10 jeweils unabhängig von den anderen Antriebsrädern 100 antreibbar.

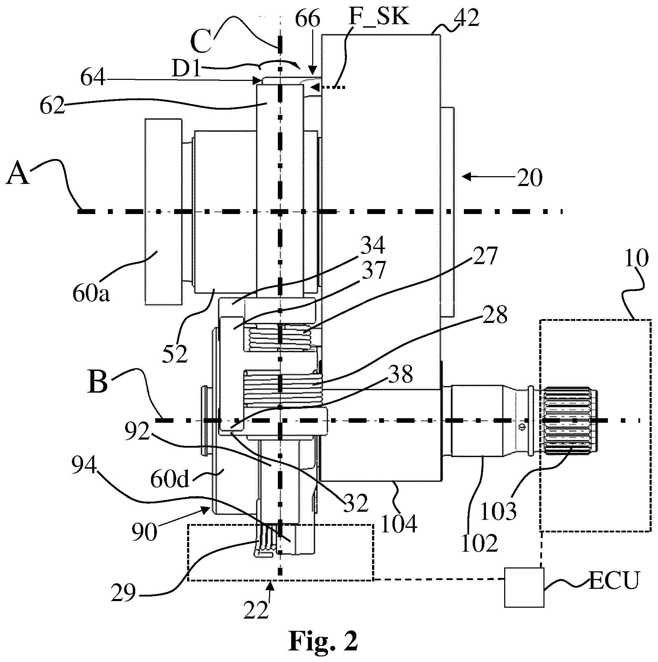

Aus Gründen der Übersichtlichkeit ist in Fig. 1 lediglich eines der Stirnradgetriebe SG mit einem der Koppelgetriebe 20 und lediglich eines der Antriebsräder 100 dargestellt. Nachfolgende Ausführungen zur Antriebsmaschine 10, zum Stirnradgetriebe SG, zum Koppelgetriebe 20 und zum Antriebsrad 100 gelten jedoch für sämtliche Antriebsmaschinen 10, Stirnradgetriebe SG, Koppelgetriebe 20 und Antriebsräder 100 des Kraftfahrzeugs K. Die Antriebsmaschine ist in Fig. 1 verdeckt und daher nicht zu erkennen, jedoch in Fig. 2 schematisch dargestellt. Zudem zeigt Fig. 2 in einer Draufsicht das Koppelgetriebe 20 und damit einen Teilbereich des Stirnradgetriebes SG.

Das Stirnradgetriebe SG umfasst eine erste Getriebewelle 102, wie in der Draufsicht in Fig. 2 zu erkennen ist. Die Getriebewelle 102 ist Drehmoment übertragend mit der elektrischen Antriebsmaschine 10 des Kraftfahrzeugs K gekoppelt. Die Drehmoment übertragende und damit drehfeste Koppelung zwischen der ersten Getriebewelle 102 und der Antriebsmaschine 10 erfolgt dabei lediglich beispielhaft über einen Keilwellenendabschnitt 103, also mit anderen Worten einen Endabschnitt der ersten Getriebewelle 102, welcher eine Keilverzahnung aufweist. Über diese Keilverzahnung ist die erste Getriebewelle 102 mit der elektrischen Antriebsmaschine 10 in Eingriff. Ebenfalls drehfest mit der ersten Getriebewelle 102 gekoppelt ist ein erstes Getriebezahnrad 104. Das erste Getriebezahnrad 104 ist mit einem ersten Zahnrad 42 des Koppelgetriebes 20 in Eingriff. Damit steht das erste Zahnrad 42 des Koppelgetriebes 20 in mittelbarem Eingriff mit der Antriebsmaschine 10, ist also mittelbar mit der Antriebsmaschine 10 gekoppelt.

Das Stirnradgetriebe SG umfasst des Weiteren eine zweite Getriebewelle 106, welche Drehmoment übertragend mit dem Antriebsrad 100 gekoppelt ist. Die erste Getriebewelle 102 und die zweite Getriebewelle 106 sind mittels des Koppelgetriebes 20 durch Einstellen der Koppelungsstellung KS Drehmoment übertragend miteinander koppelbar. Die Koppelung der zweiten Getriebewelle 106 mit dem lediglich abschnittsweise und stark abstrahiert gezeigten Antriebsrad 100 ist aus Gründen der Übersichtlichkeit lediglich in Fig. 1 dargestellt. Die erste Getriebewelle 104 dient der antriebsseitigen Drehmomentübertragung und die zweite Getriebewelle 106 der abtriebsseitigen Drehmomentübertragung. Die Drehmoment übertragende und damit drehfeste Koppelung zwischen der zweiten Getriebewelle 106 und dem Antriebsrad 100 erfolgt dabei lediglich beispielhaft über eine Innenkeilverzahnung 107 der zweiten Getriebewelle 106. Das Antriebsrad 100 ist über eine in Fig. 1 gestrichelt dargestellte Antriebsachse 110 mit der Innenkeilverzahnung 107 in Eingriff und dadurch drehfest mit der zweiten Getriebewelle 106 des Stirnradgetriebes SG gekoppelt. Anhand von Fig. 1 ist zudem erkennbar, dass das Koppelgetriebe 20 zur Drehmoment übertragenden Koppelung mit genau einer Seite der Antriebsachse 110 des Kraftfahrzeugs K vorgesehen ist, wodurch ein Einzelradantrieb des Antriebsrades 100 erfolgen kann. Dabei kann die Übertragung des Drehmoments zwischen der elektrischen Antriebsmaschine 10 und dem Antriebsrad 100 ohne Zwischenschaltung eines Differenzialgetriebes erfolgen. Die Übertragung des Drehmoments zwischen der elektrischen Antriebsmaschine 10 und dem Antriebsrad 100 kann also differenzialgetriebefrei (ohne Differenzialgetriebe) erfolgen.

Ebenfalls drehfest mit der zweiten Getriebewelle 106 gekoppelt ist ein zweites Getriebezahnrad 108 des Stirnradgetriebes SG. Das zweite Getriebezahnrad 108 ist mit einem zweiten Zahnrad 52 des Koppelgetriebes 20 in Eingriff. Somit ist das zweite Zahnrad 52 des Koppelgetriebes 20 zumindest mittelbar drehfest mit dem Antriebsrad 100 gekoppelt.

Aus Gründen der Übersichtlichkeit sind jeweilige Zahnradzähne, beispielsweise der (ersten und zweiten) Getriebezahnräder 104, 108 sowie der (ersten und zweiten) Zahnräder 42, 52, in Fig. 1 nicht dargestellt.

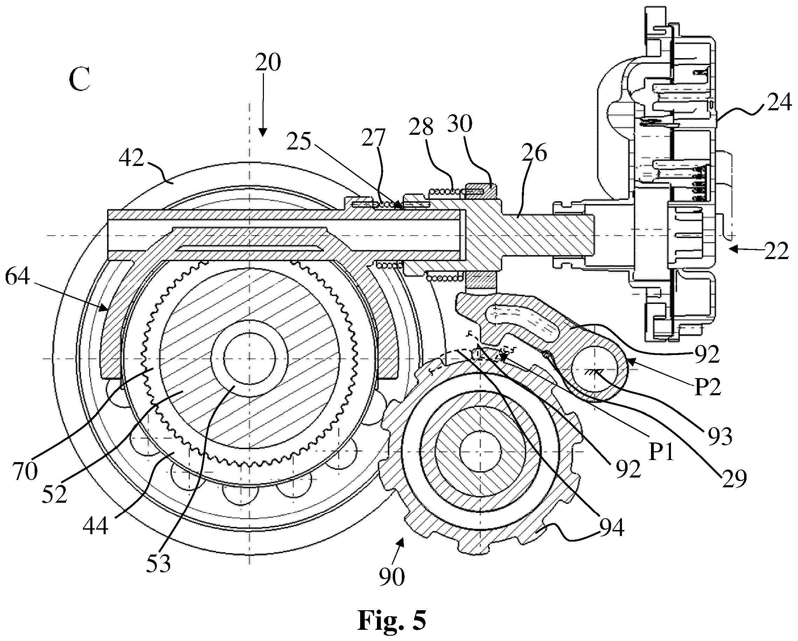

Das Kraftfahrzeug K umfasst zudem eine Parksperrvorrichtung 90, welche ein Parksperrelement 92 umfasst. Das Parksperrelement 92 ist vorliegend als Sperrklinke ausgebildet. Das Parksperrelement 92 kann zwischen einer Parksperrstellung P1, in welcher das Parksperrelement 92 mit einem Parksperrenrad 94 der Parksperrvorrichtung 90 in Eingriff steht und dadurch eine Drehung des Antriebsrades 100 blockiert und einer Entsperrstellung P2 verlagert werden, wie anhand von Fig. 5 zu erkennen ist. In Fig. 5 ist die Parksperrstellung P1 schematisch durch gestrichelte Darstellung von Teilbereichen des Parksperrenrades 94 und des Parksperrelements 92 verdeutlicht. In der beispielsweise in Fig. 1 erkennbaren Entsperrstellung P2 ist das Parksperrelement 92 nicht im Eingriff mit dem Parksperrenrad 94, wodurch die Drehung des Antriebsrades 100 freigegeben, also nicht durch die Parksperrvorrichtung 90 blockiert ist. Anhand von Fig. 2 ist beispielsweise erkennbar, dass das Parksperrenrad 94 drehfest mit der ersten Getriebewelle 102 sowie mit dem ersten Getriebezahnrad 104 und der elektrischen Antriebsmaschine 10 gekoppelt ist. Wie anhand von Fig. 5 ersichtlich ist, kann das Parksperrelement 92 über ein Parksperrelement-Lager 93 an einem vorliegend nicht weiter gezeigten Gehäuse, beispielsweise dem Gehäuse des Stirnradgetriebes SG drehbar gelagert sein und durch eine Schwenkbewegung des Parksperrelements 92 um das Parksperrelement-Lager 93 zwischen der Parksperrstellung P1 und der Entsperrstellung P2 verlagert werden.

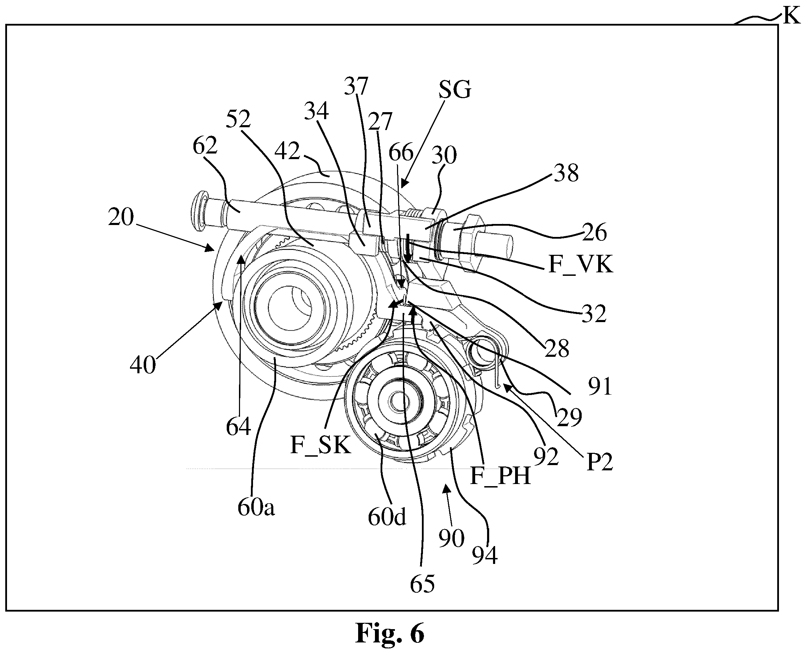

Das Schaltelement 62 umfasst zudem einen in Fig. 6 erkennbaren Rückhaltebereich 65, welcher das Parksperrelement 92 an der Verlagerung in die Parksperrstellung P1 hindert, solange keine Einstellung der Koppelungsstellung KS vorliegt. Um dies zu erreichen, kann über den Rückhaltebereich 65 eine Positions-Haltekraft F_PH auf einen Sperrelement-Absatz 91 des Parksperrelements 92 ausgeübt werden. Dadurch ist die Parksperrvorrichtung 90 in besonderem Maße funktionsgesichert. Der Rückhaltebereich 65 kann insbesondere sicherstellen, dass das Koppelgetriebe 20 immer erst in der Koppelungsstellung KS ist, bevor die Parksperrstellung P1 eingestellt werden kann. Durch den Einsatz des Rückhaltebereichs 65 kann ein vereinfachter Bauteilschutz, insbesondere jeweiliger Verzahnungen des Koppelgetriebes 20, erzielt werden, wobei ein etwaiges Eintreten zufälliger Ereignisse zuverlässig ausgeschlossen werden kann.

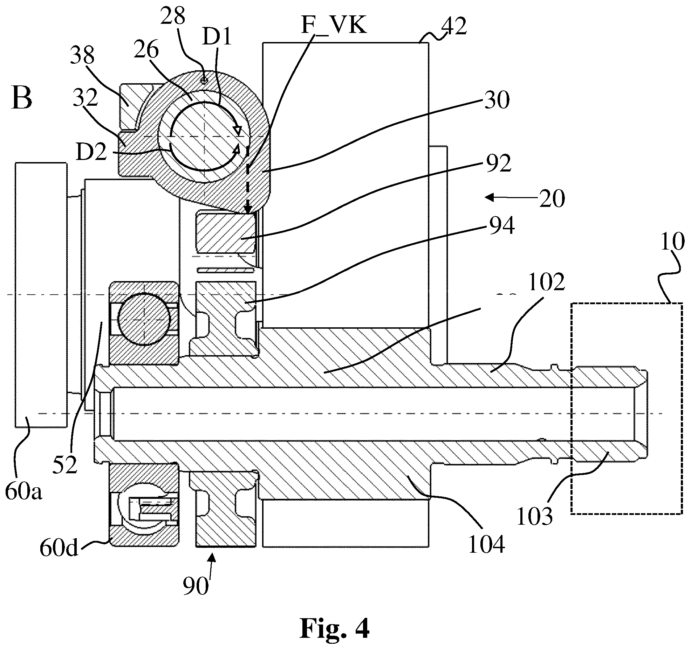

Zur Lagerung des Koppelgetriebes 20 in diesem Gehäuse können beispielsweise mehrere Wälzlager 60a, 60b herangezogen werden, wie anhand von Fig. 3 erkennbar ist. Es ist jedoch klar, dass noch weitere Lager vorgesehen sein können. Die Wälzlager 60a, 60b sind vorliegend als angestellte Zylinderrollenlager ausgebildet, wobei das Wälzlager 60a zur drehbaren Lagerung des zweiten Zahnrades 52 am Gehäuse und das Wälzlager 60b zur drehbaren Lagerung des ersten Zahnrades 42 am Gehäuse dient. Über ein weiteres Wälzlager 60c (siehe Fig. 3), welches vorliegend beispielhaft als Nadellager ausgebildet ist, ist das erste Zahnrad 42 auf einer Welle 53 des zweiten Zahnrades 52 drehbar gelagert und abgestützt. Zudem sind die beiden Zahnräder 42, 52 über ein weiteres Wälzlager 60e nämlich ein Axialnadellager, in Axialerstreckungsrichtung und damit in Richtung einer Drehachse x gegeneinander abgestützt. In Fig. 4 ist gezeigt, dass die erste Getriebewelle 102 und damit das erste Getriebezahnrad 104 über ein weiteres Wälzlager 60d, welches vorliegend beispielhaft als Kugellager ausgebildet ist, am (nicht weiter gezeigten) Gehäuse abgestützt ist.

Das Kraftfahrzeug K umfasst des Weiteren eine Betätigungsvorrichtung 22 mit einem Aktuator 24. Der Aktuator 24 ist einerseits zum Betätigen einer, wenigstens ein Schaltelement 62 aufweisenden Kupplung 40 des Koppelgetriebes 20, die zum Schalten zwischen der Koppelungsstellung KS und der Entkoppelungsstellung ES dient, ausgebildet. Andererseits dient der Aktuator 24 auch zum Verlagern des Parksperrelements 92 zwischen der Parksperrstellung P1 und der Entsperrstellung P2. Das Schaltelement 62 ist beispielsweise als Schaltschwinge oder als Schaltgabel ausgebildet, wie anhand von Fig. 1 zu erkennen ist.

Die Kupplung 40 ist vorliegend als Formschlusskupplung, nämlich als Klauenkupplung, ausgebildet. Das Kraftfahrzeug K umfasst ein Steuergerät ECU, mittels welchem die Betätigungsvorrichtung 22 sowie die elektrische Antriebsmaschine 10 angesteuert werden kann, wie schematisch in Fig. 2 dargestellt ist.

Der Aufbau der Kupplung 40 ist durch Zusammenschau von Fig. 1 mit der Schnittdarstellung in Fig. 3 erkennbar. Die Kupplung 40 umfasst ein erstes Kupplungselement 44, welches zumindest mittelbar, nämlich mittels eines zweiten Kupplungselements 54 der Kupplung 40, drehfest mit dem ersten Zahnrad 42 gekoppelt ist. Das zweite Kupplungselement 54 kann als Festmuffe ausgebildet sein, welche drehfest mit dem ersten Zahnrad 42 gekoppelt sein kann. Vorliegend jedoch ist das zweite Kupplungselement 54 als Verzahnung ausgebildet, welche in einer Zahnradausnehmung 43 des ersten Zahnrades 42 angeordnet, einteilig mit dem ersten Zahnrad 42 verbunden und dadurch drehfest mit dem ersten Zahnrad 42 gekoppelt ist. Durch das zweite Kupplungselement 54 ist das erste Kupplungselement 44 zwar drehfest mit dem ersten Zahnrad 42 gekoppelt, jedoch ist aufgrund der Verzahnung eine relative axiale Verschiebung zwischen dem ersten Kupplungselement 44 und dem zweiten Kupplungselement 54 parallel zu der Drehachse x, um welche sich die Zahnräder 42, 52 beim Betrieb des Kraftfahrzeugs K beispielsweise in einer durch einen Pfeil verdeutlichten Umfangsrichtung U drehen können, möglich.

Zudem umfasst die Kupplung 40 ein Verbindungselement 70, welches einerseits unmittelbar mit dem zweiten Zahnrad 52 gekoppelt und andererseits unmittelbar mit dem ersten Kupplungselement 44 drehfest koppelbar ist, indem das erste Kupplungselement 44 von der Entkoppelungsstellung ES in die Koppelungsstellung KS geschaltet wird. Das Verbindungselement 70 ist vorliegend über jeweilige nicht näher bezeichnete Steckverzahnungen einerseits mit dem ersten Kupplungselement 44 und andererseits mit dem zweiten Zahnrad 52 in Eingriff. Das Verbindungselement 70 kann insbesondere als Festmuffe ausgebildet sein, wie anhand von Fig. 3 zu erkennen ist. Zum Einstellen der Koppelungsstellung KS wird das erste Kupplungselement 44 mit dem Verbindungselement 70 in Eingriff gebracht, wie in Fig. 3 gezeigt ist.

Zum Unterbinden des Schaltens von der Entkoppelungsstellung ES in die Koppelungsstellung KS bei einem Drehzahlunterschied zwischen dem ersten Zahnrad 42 und dem zweiten Zahnrad 52 umfasst die Kupplung 40 ein Sperrelement 80. Das Sperrelement 80 dient zur Freigabe einer das Schalten von der Entkoppelungsstellung ES in die Koppelungsstellung KS bewirkenden Relativbewegung RB zwischen dem ersten Kupplungselement 44 und dem zweiten Kupplungselement 54 bei Drehzahlgleichheit zwischen dem ersten Zahnrad 42 und dem zweiten Zahnrad 52. Bei Drehzahlgleichheit gestattet also das Sperrelement 80 das Bewegen des ersten Kupplungselements 44 und damit das Umschalten von der Entkoppelungsstellung ES in die Koppelungsstellung KS, wobei in der Koppelungsstellung KS der Kraftfluss KF über das erste Zahnrad 42, das zweite Kupplungselement 54, das erste Kupplungselement 44, das Verbindungselement 70 und das zweite Zahnrad 52 geführt werden kann.

Bei anhand der elektrischen Antriebsmaschine 10 hergestellter Drehzahlgleichheit zwischen dem ersten Zahnrad 42 und dem zweiten Zahnrad 52 gibt das Sperrelement 80 also insgesamt die das Schalten von der Entkoppelungsstellung ES in die Koppelungsstellung KS bewirkende Relativbewegung RB zwischen dem ersten Kupplungselement 44 und dem zweiten Kupplungselement 54 frei.

In Fig. 3 ist die jeweilige Position des ersten Kupplungselements 44 zur Verdeutlichung sowohl in der Koppelungsstellung KS als auch in der Entkoppelungsstellung ES (gestrichelte Linien) gezeigt. Von Vorteil ist hierbei, wenn neben dem zweiten Kupplungselement 54 und dem Sperrelement 80, welche jeweils vollständig in der Zahnradausnehmung 43 angeordnet sind, auch das erste Kupplungselement 44 und das Verbindungselement 70 wenigstens teilweise, bevorzugt vollständig, in der Zahnradausnehmung 43 angeordnet sind. Der Kraftfluss KF zwischen dem ersten Zahnrad 42 und dem zweiten Zahnrad 52 ergibt sich auf besonders kleinen Bauraum und erstreckt sich damit über einen besonders kurzen Weg, wenn das erste Kupplungselement 44 nicht nur in der Entkoppelungsstellung ES sondern auch in der Koppelungsstellung KS in der Zahnradausnehmung 43 angeordnet ist.

Das Schaltelement 62 dient zum Einstellen der Koppelungsstellung KS sowie der Entkoppelungsstellung ES. Das Schaltelement 62 umfasst einen ersten Elementarmabschnitt 64 und einen unmittelbar mit dem ersten Elementarmabschnitt 64 verbundenen sowie einen Winkel mit dem ersten Elementarmabschnitt 64 einschließenden, zweiten Elementarmabschnitt 66. Der erste Elementarmabschnitt 64 und der zweite Elementarmabschnitt 66 bilden miteinander eine L-Form, durch welche eine besonders platzsparende und störungsfreie Schaltung ermöglicht ist. In Zusammenschau von Fig. 1 mit Fig. 3 ist erkennbar, dass das Schaltelement 62 über den zweiten Elementarmabschnitt 66 mit dem ersten Kupplungselement 44 drehbar gekoppelt ist. Dabei kann das Schaltelement 62, insbesondere an dem zweiten Elementarmabschnitt 66, ein Eingriffselement 63, beispielsweise einen Gleitstein, oder einen Eingriffsbereich aufweisen, welche in eine sich zumindest bereichsweise in Umfangsrichtung U erstreckende Eingriffsnut 45 des ersten Kupplungselement 44 eingeführt ist. Das Eingriffselement 63 ist in Fig. 1 erkennbar und schematisch in Fig. 3 gezeigt.

Wird das Schaltelement 62 durch den Aktuator 24 gedreht, so können die Schaltelementarmabschnitte 64, 66 geschwenkt und dadurch ein Verlagern des ersten Kupplungselements 44 zwischen der Koppelungsstellung KS und der Entkoppelungsstellung ES bewirkt werden.

Ein Beispiel für ein oben genanntes, zufälliges Ereignis stellt ein Zahn-auf-Zahn-Stehen des ersten Kupplungselements 44 und des Verbindungselements 70 dar, sodass die Relativbewegung RB zumindest kurzzeitig blockiert sein kann. Unter dem Ausdruck "Zahn-auf-Zahn-Stehen" ist vorliegend zu verstehen, dass jeweilige Zähne des ersten Kupplungselements 44 sowie des Verbindungselements 70 im Stillstand des Kraftfahrzeugs K entlang einer Parallelen zur Drehachse x miteinander überlappen und damit beispielsweise fluchten, sodass die Relativbewegung RB zumindest vorübergehend mechanisch blockiert sein kann. Würde nun das Parksperrelement 92 und das Parksperrenrad 94 derart zueinander ausgerichtet sein, dass das Parksperrelement 92 die Parksperrstellung P1 einnehmen könnte, so könnte es zu einer etwaigen Bauteilüberbeanspruchung, insbesondere jeweiliger Zähne des ersten Kupplungselements 44 und/oder des Verbindungselementes 70 kommen. Um dies zu vermeiden, verhindert der Rückhaltebereich 65 die Verlagerung des Parksperrelements 92 in die Parksperrstellung P1, zumindest solange die Relativbewegung RB blockiert ist.

Die Betätigungsvorrichtung 22 umfasst ein mittels des Aktuators 24 verstellbares Betätigungselement 26, welches einerseits zum Ausüben einer Schaltkraft F_SK auf das Schaltelement 62 zum Betätigen der Kupplung 40 und andererseits zum Ausüben einer Verlagerungskraft F_VK, zum Verlagern des Parksperrelements 92 zwischen der Parksperrstellung P1 und der Entsperrstellung P2 ausgebildet ist. Das Betätigungselement 26 ist beispielsweise in Fig. 1 und in Schnittdarstellung in Fig. 5 gezeigt. Das Betätigungselement 26 kann bevorzugt als Welle ausgebildet sein. Diese Welle kann drehfest mit einer Rotorwelle des Aktuators 24 verbunden sein. Alternativ dazu kann das Betätigungselement 26 auch als Rotorwelle des Aktuators 24 ausgebildet sein.

Anhand von Fig. 5 ist erkennbar, dass das Schaltelement 62 in eine Betätigungselement-Ausnehmung 25 des Betätigungselements 26 eingeführt und dort drehbar gelagert sein kann. Das Betätigungselement 26 ist über ein als Drehfeder ausgebildetes, erstes Federelement 27 der Betätigungsvorrichtung 22 unmittelbar kraftübertragend mit dem Schaltelement 62 der Kupplung 40 gekoppelt.

Ebenfalls in Fig. 5 ist erkennbar, dass das Betätigungselement 26 über ein, ebenfalls als Drehfeder ausgebildetes, zweites Federelement 28 der Betätigungsvorrichtung 22 unmittelbar kraftübertragend mit einem Exzenterelement 30 der Betätigungsvorrichtung 30 gekoppelt ist, mittels welchem das Parksperrelement 92 zwischen der Parksperrstellung P1 und der Entsperrstellung P2 verlagerbar ist. Das Exzenterelement 30 ist vorliegend als Nocke ausgebildet, wie anhand von Fig. 4 zu erkennen ist. Alternativ dazu könnte das Exzenterelement 30 auch als exzentrisch gelagerte Kreisscheibe ausgebildet sein, was vorliegend jedoch nicht weiter gezeigt ist.

Das Betätigungselement 26 kann allgemein durch Betreiben des Aktuators 24 in eine Drehrichtung D1 gedreht werden, wodurch sowohl die Schaltkraft F_SK über das erste Federelement 27 auf das Schaltelement 62 als auch die Verlagerungskraft F_VK über das zweite Federelement 28 auf das Exzenterelement 30 ausgeübt werden kann.

In Fig. 1 hält die Betätigungsvorrichtung 22 einen Antriebsschaltzustand aufrecht, in welchem die Koppelungsstellung KS geschaltet und gleichzeitig das Parksperrelement 92 in der Entsperrstellung P2 verlagert gehalten ist. In dem Antriebsschaltzustand ist das Antreiben des Kraftfahrzeugs K durch Koppelung der elektrischen Antriebsmaschine 10 über das Koppelgetriebe 20 mit dem Antriebsrad 100 sichergestellt und gleichzeitig das Parksperrelement 92 offen und damit in der Entsperrstellung ES gehalten ist.

In einem ebenfalls schaltbaren Freigabezustand kann das Kraftfahrzeug K beispielsweise in einem sogenannten Segelbetrieb betrieben, also ein sogenanntes Segeln des Kraftfahrzeugs K ermöglicht werden, in welchem das Kraftfahrzeug K bewegt wird, ohne dass die jeweiligen elektrischen Antriebsmaschinen 10 die jeweiligen Antriebsräder 100 antreiben und ohne dass die jeweiligen Parksperrvorrichtung 90 das Bewegen des Kraftfahrzeugs K, insbesondere das Rollen der jeweiligen Antriebsräder 100, blockiert. Im Freigabezustand ist die Entkoppelungsstellung ES geschaltet und gleichzeitig das Parksperrelement 92 in der Entsperrstellung P2 verlagert gehalten.

Das an dem Gehäuse drehbar gelagerte Parksperrelement 92 wird mittels eines, beispielsweise der Betätigungsvorrichtung 22 zugeordneten, dritten Federelements 29, das - ebenso wie das erste Federelement 27 und das zweite Federelement 28 - als Drehfeder ausgebildet ist, entgegen der Schwerkraft gegen das Exzenterelement 30 gedrückt und dort in der Entsperrstellung P2 gehalten.

Im Freigabezustand liegt ein exzenterelementseitiger Anschlag 32, welcher als Vorsprung ausgebildet ist und auch als dem Exzenterelement 30 zugeordneter Anschlag bezeichnet werden kann, an einem Exzenterelementanschlag 38 an. Der dem Betätigungselement 26 zugeordnete Exzenterelementanschlag 38 ist vorliegend ebenfalls als Vorsprung ausgebildet, wie besonders deutlich in Fig. 4 und auch in Fig. 2 zu erkennen ist. Darüber hinaus liegt im Freigabezustand ein schaltelementseitiger Anschlag 34, welcher als Vorsprung ausgebildet ist und auch als dem Schaltelement 62 zugeordneter Anschlag bezeichnet werden kann, an einem Schaltelementanschlag 37 des Betätigungselements 26 an. Der dem Betätigungselement 26 zugeordnete Schaltelementanschlag 37 ist vorliegend ebenfalls als Vorsprung ausgebildet, wie anhand von Fig. 1 und Fig. 2 zu erkennen ist

Mittels des Schaltelementanschlags 37 kann eine Bewegung, insbesondere Drehung, des Schaltelements 62 relativ zu dem Betätigungselement 26 begrenzt werden. Mittels des Exzenterelementanschlags 38 kann eine Bewegung, insbesondere Drehung, des drehbar auf dem Betätigungselement 26 gelagerten Exzenterelements 30 relativ zu dem Betätigungselement 26 begrenzt werden.

Anhand der Betätigungsvorrichtung 22 kann auch der Antriebsschaltzustand eingestellt werden, bei welchem wie gesagt die Koppelungsstellung KS geschaltet und gleichzeitig das Parksperrelement 92 in der Entsperrstellung P2 verlagert gehalten ist. Im Antriebsschaltzustand ist also das Antriebsrad 100 über das Stirnradgetriebe SG und damit auch das Koppelgetriebe 20 mit der elektrischen Antriebsmaschine 10 gekoppelt und die Parksperrvorrichtung 90 offen, sodass das Antriebsrad 100 durch die elektrische Antriebsmaschine 10 angetrieben werden kann, ohne dass die Parksperrvorrichtung 90 das Antreiben des Antriebsrades 100 blockiert.

Um den Antriebsschaltzustand einzustellen, kann das Betätigungselement 26 anhand des Aktuators 24 entsprechend der in Fig. 2 und in Fig. 3 durch einen Pfeil verdeutlichten Drehrichtung D1 (hier: im Uhrzeigersinn) gedreht werden. Sofern keine Drehzahlgleichheit zwischen dem Zahnrädern 42, 52 besteht, verhindert das Sperrelement 80 das Schalten von der Entkoppelungsstellung ES in die Koppelungsstellung KS und damit die entsprechende Relativbewegung RB des ersten Kupplungselement 44 mittels des Schaltelements 62.

Durch das Drehen des Betätigungselements 26 in der Drehrichtung D1 wird das erste Federelement 27, über welches das Schaltelement 62 und das Betätigungselement 26 kraftübertragend miteinander gekoppelt sind, vorgespannt. Der Aktuator 24 übt hierzu ein Drehmoment aus, durch welches das erste Federelement 27 mechanisch vorgespannt und dadurch die Schaltkraft F_SK in dem ersten Federelement 27 gespeichert wird, solange das Sperrelement 80 das Koppeln des ersten Kupplungselement 44 mit dem Verbindungselement 70 und damit das Einstellen der Koppelungsstellung KS unterbindet. Dabei wird das erste Kupplungselement 44 mittels des ersten Federelements 27 über das Schaltelement 62 und das in der Eingriffsnut 45 angeordnete Eingriffselement 63 sozusagen anhand der Schaltkraft F_SK in Richtung des Sperrelements 80 gedrückt. Das Sperrelement 80 verhindert das Koppeln des ersten Kupplungselements 44 mit dem Verbindungselement 70 solange der Drehzahlunterschied zwischen dem ersten Zahnrad 42 und dem zweiten Zahnrad 52 herrscht. Sobald die elektrische Antriebsmaschine 10 den Drehzahlunterschied ausgeglichen hat und damit Drehzahlgleichheit zwischen den beiden Zahnrädern 42, 52 besteht, gibt das Sperrelement 80 das Koppeln des ersten Kupplungselements 44 mit dem Verbindungselement 70 und damit das Einstellen der Koppelungsstellung KS frei. Infolgedessen bewegt sich das erste Kupplungselement 44 durch das Ausüben der Schaltkraft F_SK in Richtung des Verbindungselements 70 und das erste Kupplungselement 44 wird mit dem Verbindungselement 70 in Eingriff gebracht, wodurch die Koppelungsstellung KS eingestellt wird. Es ist klar, dass beispielsweise bei einer Beschleunigung des Kraftfahrzeugs K aus dessen Stillstand auch ohne Eingriffe der elektrischen Antriebsmaschine 10 Drehzahlgleichheit herrschen kann, sodass dementsprechend auf einen Eingriff der elektrischen Antriebsmaschine 10 verzichtet werden kann, da in diesem Fall kein Drehzahlunterschied besteht.

Ebenfalls durch das Drehen des Betätigungselements 26 in der Drehrichtung D1 wird auch das zweite Federelement 28, über welches das Exzenterelement 30 und das Betätigungselement 26 kraftübertragend miteinander gekoppelt sind, vorgespannt. Durch das anhand des Aktuators 24 ausgeübte Drehmoment kann das zweite Federelement 28 mechanisch vorgespannt werden und dadurch die Verlagerungskraft F_VK in dem zweiten Federelement 28 gespeichert werden, wenn das Verlagern des Parksperrelements 92 von der Entsperrstellung P2 in die Parksperrstellung P1 mechanisch unterbunden ist. Das Verlagern von der Entsperrstellung P2 in die Parksperrstellung P1 kann beispielsweise dann mechanisch unterbunden sein, wenn das Parksperrelement 92 und das Parksperrenrad 94 wie in Fig. 1 gezeigt zueinander orientiert sind, also wenn das Parksperrelement 92 nicht in das Parksperrelement 94 eingreifen kann. Sofern eine Drehzahl der ersten Getriebewelle 102 einen vorbestimmten Drehzahlgrenzwert unterschreitet, also die Drehzahl der ersten Getriebewelle ausreichend klein ist, was beispielsweise bei einer Fahrgeschwindigkeit des Kraftfahrzeugs K von weniger als 5 km/h der Fall sein kann, kann das Parksperrelement 92 (hier: Sperrklinke) mit dem Parksperrenrad 94 in Eingriff gebracht werden, also das Parksperrelement 92 von der Entsperrstellung P2 in die Parksperrstellung PP1 verlagert werden. Hierzu wird das Exzenterelement 30 durch die in dem zweiten Federelement 28 gespeicherte Verlagerungskraft F_VK in der (ersten) Drehrichtung D1 gedreht und drückt das Parksperrelement 92 in eine Position, in welcher das Parksperrelement 92 mit dem Parksperrenrad 94 verrastet und damit die Parksperrstellung P1 eingestellt ist. In diesem Fall ist dann sowohl die Koppelungsstellung KS geschaltet als auch gleichzeitig das Parksperrelement 92 in der Parksperrstellung P1 verlagert gehalten, sodass ein Blockierschaltzustand eingestellt ist. Das Kraftfahrzeug K kann also dann anhand der Parksperrvorrichtung 90 im Stillstand gehalten werden.

Beim Betrieb des Kraftfahrzeugs K ist es also allgemein möglich anhand der Betätigungsvorrichtung 22 das erste Federelement 27 mit der Schaltkraft F_SK und zusätzlich, insbesondere gleichzeitig, das zweite Federelement 28 mit der Verlagerungskraft F_VK in einem jeweils vorgespannten Zustand zu halten. Sobald die Drehzahlgleichheit zwischen den beiden Zahnrädern 42, 52 herrscht, also die beiden Zahnräder 42, 52 jeweils die gleiche Drehzahl (Zahnrad-Drehzahl) aufweisen, kann über das erste Federelement 27, insbesondere durch zumindest teilweises Entspannen des ersten Federelements 27 und dadurch bewirktes Schwenken der Elementarmabschnitte 64, 66 das erste Kupplungselement 44 bewegt und von der Entkoppelungsstellung ES in die Koppelungsstellung KS geschaltet werden. Sobald die Fahrgeschwindigkeit des Kraftfahrzeugs K ausreichend klein ist, kann über das zweite Federelement 28, insbesondere durch zumindest teilweises Entspannen des zweiten Federelements 28, das Parksperrelement 92 mittels des Exzenterelements 30 entgegen einer Federkraft des dritten Federelements 29 bewegt und von der Entsperrstellung P2 in die Parksperrstellung P1 bewegt werden.

Um wiederum den Freigabezustand einzustellen, kann das Betätigungselement 26 durch Betrieb des Aktuators 24 in eine, der ersten Drehrichtung D1 entgegengesetzte, zweite Drehrichtung D2 gedreht werden. Zur Einstellung des Freigabezustands ausgehend vom Antriebsschaltzustand und/oder vom Blockierschaltzustand ist der Schaltelementanschlag 37 sowie der schaltelementseitige Anschlag 34 und/oder der Exzenterelementanschlag 38 sowie der exzenterelementseitigen Anschlag 32 besonders nützlich, da die jeweiligen miteinander korrespondierenden Anschläge 37, 34 bzw. 38, 32 ein zuverlässiges Rückstellen des Schaltelements 62 und/oder des Exzenterelements 30 und damit die zuverlässige Einstellung der Entkoppelungsstellung ES sowie der Entsperrstellung PS ermöglichen.

Ein wesentlicher Vorteil des Kraftfahrzeugs K besteht darin, dass durch die beschriebene Anordnung ein unerwünschter Schaltzustand, in welchem die Parksperrstellung P1 und gleichzeitig die Entkoppelungsstellung ES eingestellt ist, zuverlässig ausgeschlossen werden kann. Damit weist das Kraftfahrzeug K ein besonders hohes Maß an Funktionssicherheit auf.

### Bezugszeichenliste

- 10: Antriebsmaschine
- 20: Koppelgetriebe
- 22: Betätigungsvorrichtung
- 24: Aktuator
- 25: Betätigungselement-Ausnehmung
- 26: Betätigungselement
- 27: erstes Federelement
- 28: zweites Federelement
- 29: drittes Federelement
- 30: Exzenterelement
- 32: exzenterelementseitiger Anschlag
- 34: schaltelementseitiger Anschlag
- 37: Schaltelementanschlag
- 38: Exzenterelementanschlag
- 40: Kupplung
- 42: erstes Zahnrad
- 43: Zahnradausnehmung
- 44: erstes Kupplungselement
- 45: Eingriffsnut
- 52: zweites Zahnrad
- 53: Welle
- 54: zweites Kupplungselement
- 60a-e: Wälzlager
- 62: Schaltelement
- 63: Eingriffselement
- 64: erster Elementarmabschnitt
- 65: Rückhaltebereich
- 66: zweiter Elementarmabschnitt
- 70: Verbindungselement
- 80: Sperrelement
- 90: Parksperrvorrichtung
- 91: Sperrelement-Absatz
- 92: Parksperrelement
- 93: Parksperrelement-Lager
- 94: Parksperrenrad
- 100: Antriebsrad
- 102: erste Getriebewelle
- 103: Keilwellenendabschnitt
- 104: erstes Getriebezahnrad
- 106: zweite Getriebewelle
- 107: Innenkeilverzahnung
- 108: zweites Getriebezahnrad
- 110: Antriebsachse
- D1: (erste) Drehrichtung
- D2: (zweite) Drehrichtung
- ECU: Steuergerät
- F_SK: Schaltkraft
- F_PH: Positionshaltekraft
- F_VK: Verlagerungskraft
- K: Kraftfahrzeug
- KF: Kraftfluss
- KS: Koppelungsstellung
- ES: Entkoppelungsstellung
- P1: Parksperrstellung
- P2: Entsperrstellung
- RB: Relativbewegung
- SG: Stirnradgetriebe
- U: Umfangsrichtung
- x: Drehachse

## Patentansprüche

1. Kraftfahrzeug (K) mit wenigstens einer elektrischen Antriebsmaschine (10), zum Antreiben des Kraftfahrzeugs (K), mit wenigstens einem Koppelgetriebe (20), welches zumindest zwischen einer Koppelungsstellung (KS), in welcher die elektrische Antriebsmaschine (10) Drehmoment übertragend mit einem Antriebsrad (100) des Kraftfahrzeugs (K) gekoppelt ist, und einer Entkoppelungsstellung (ES), in welcher die elektrische Antriebsmaschine (10) von dem Antriebsrad (100) entkoppelt ist, schaltbar ist, und mit einer Parksperrvorrichtung (90), welche zumindest ein Parksperrelement (92) umfasst, das zwischen einer Parksperrstellung (P1), in welcher das zumindest eine Parksperrelement (92) eine Drehung des Antriebsrades (100) zumindest mittelbar blockiert und einer Entsperrstellung (P2), in welcher das zumindest eine Parksperrelement (92) die Drehung des Antriebsrades (100) freigibt, verlagerbar ist, wobei das Kraftfahrzeug (K) wenigstens eine Betätigungsvorrichtung (22) mit einem Aktuator (24) umfasst, welche einerseits zum Betätigen einer, wenigstens ein Schaltelement (62) aufweisenden Kupplung (40) des Koppelgetriebes (20), die zum Schalten zwischen der Koppelungsstellung (KS) und der Entkoppelungsstellung (ES) dient, ausgebildet ist, und andererseits zum Verlagern des zumindest einen Parksperrelements (92) zwischen der Parksperrstellung (P1) und der Entsperrstellung (P2) ausgebildet ist, wobei das Schaltelement (62) so ausgestaltet ist, dass es einen Rückhaltebereich (65) umfasst, welcher das zumindest eine Parksperrelement (92) an der Verlagerung in die Parksperrstellung (P1) hindert, solange keine Einstellung der Koppelungsstellung (KS) vorliegt, wobei der Aktuator zur Erzeugung einer Drehbewegung ausgebildet ist, mittels welcher sowohl die Kupplung (40) betätigbar als auch das Parksperrelement (92) verlagerbar ist, und
wobei die wenigstens eine Betätigungsvorrichtung (22) ein mittels des Aktuators (24) verstellbares Betätigungselement (26) umfasst, welches einerseits zum Ausüben zumindest einer Schaltkraft (F_SK) auf das Schaltelement (62) zum Betätigen der Kupplung (40) und andererseits zum Ausüben wenigstens einer Verlagerungskraft (F_VK), zum Verlagern des zumindest einen Parksperrelements (92) zwischen der Parksperrstellung (P1) und der Entsperrstellung (P2) ausgebildet ist,
**dadurch gekennzeichnet, dass**
das wenigstens eine Betätigungselement (26) über ein zweites Federelement (28) der Betätigungsvorrichtung (22) kraftübertragend zumindest mittelbar mit einem Exzenterelement (30) der Betätigungsvorrichtung (30) gekoppelt ist, mittels welchem das Parksperrelement (92) zwischen der Parksperrstellung (P1) und der Entsperrstellung (P2) verlagerbar ist.

2. Kraftfahrzeug (K) nach Anspruch 1,
**dadurch gekennzeichnet, dass**
die Betätigungsvorrichtung (22) dazu ausgebildet ist, einen Freigabezustand einzustellen, bei welchem die Entkoppelungsstellung (ES) geschaltet und gleichzeitig das Parksperrelement (92) in der Entsperrstellung (P2) verlagert gehalten ist.

3. Kraftfahrzeug (K) nach Anspruch 1 oder 2,
**dadurch gekennzeichnet, dass**
die Betätigungsvorrichtung (22) dazu ausgebildet ist, einen Antriebsschaltzustand einzustellen, bei welchem die Koppelungsstellung (KS) geschaltet und gleichzeitig das Parksperrelement (92) in der Entsperrstellung (P2) verlagert gehalten ist.

4. Kraftfahrzeug (K) nach einem der vorhergehenden Ansprüche,
**dadurch gekennzeichnet, dass**
die Betätigungsvorrichtung (22) dazu ausgebildet ist, einen Blockierschaltzustand einzustellen, bei welchem die Koppelungsstellung (KS) geschaltet und gleichzeitig das Parksperrelement (92) in der Parksperrstellung (P1) verlagert gehalten ist.

5. Kraftfahrzeug (K) nach einem der vorhergehenden Ansprüche,
**dadurch gekennzeichnet, dass**
das wenigstens eine Betätigungselement (26) über ein erstes Federelement (27) der Betätigungsvorrichtung (22) kraftübertragend zumindest mittelbar mit dem wenigstens einen Schaltelement (62) der Kupplung (40) gekoppelt ist.

6. Kraftfahrzeug (K) nach Anspruch 5,
**dadurch gekennzeichnet, dass**
das Betätigungselement (26) mittels des Aktuators (24) in eine Drehrichtung (D1) drehbar ist, wodurch sowohl die zumindest eine Schaltkraft (F_SK) über das erste Federelement (27) auf das Schaltelement (62) als auch die wenigstens eine Verlagerungskraft (F_VK) über das zweite Federelement (28) auf das Exzenterelement (30) ausübbar ist.

7. Kraftfahrzeug (K) nach einem der Ansprüche 5 oder 6,
**dadurch gekennzeichnet, dass**
das Betätigungselement (26) einen Schaltelementanschlag (37) aufweist, mittels welchem eine Bewegung des Schaltelements (62) relativ zu dem Betätigungselement (26) begrenzbar ist und/oder das Betätigungselement (26) einen Exzenterelementanschlag (38) aufweist, mittels welchem eine Bewegung des Exzenterelements (30) relativ zu dem Betätigungselement (26) begrenzbar ist.

8. Kraftfahrzeug (K) nach einem der vorhergehenden Ansprüche,
**dadurch gekennzeichnet, dass**
das Koppelgetriebe (20) ein erstes Zahnrad (42) umfasst, welches in zumindest mittelbarem Eingriff mit der Antriebsmaschine (10) steht, sowie ein anhand der Kupplung (40) mit dem ersten Zahnrad (42) Drehmoment übertragend koppelbares, zweites Zahnrad (52), welches zumindest mittelbar drehfest mit dem Antriebsrad (100) gekoppelt ist, wobei die Kupplung (40) ein erstes Kupplungselement (44), welches zumindest mittelbar drehfest über ein drehfest mit dem ersten Zahnrad (42) verbundenes, zweites Kupplungselement (54) der Kupplung (40) mit dem ersten Zahnrad (42) gekoppelt ist, umfasst und wobei die Kupplung (40) ein Verbindungselement (70) umfasst, welches einerseits zumindest mittelbar mit dem zweiten Zahnrad (52) gekoppelt und andererseits zumindest mittelbar mit dem ersten Kupplungselement (44) drehfest koppelbar ist.

9. Kraftfahrzeug (K) nach Anspruch 8,
**dadurch gekennzeichnet, dass**
die Kupplung (40) ein Sperrelement (80) zum Unterbinden des Schaltens von der Entkoppelungsstellung (ES) in die Koppelungsstellung (KS) bei einem Drehzahlunterschied zwischen dem ersten Zahnrad (42) und dem zweiten Zahnrad (52) und zur Freigabe einer das Schalten von der Entkoppelungsstellung (ES) in die Koppelungsstellung (KS) bewirkenden Relativbewegung (RB) zwischen dem ersten Kupplungselement (44) und dem zweiten Kupplungselement (54) bei Drehzahlgleichheit zwischen dem ersten Zahnrad (42) und dem zweiten Zahnrad (52) umfasst.

10. Kraftfahrzeug (K) nach Anspruch 8 oder 9,
**dadurch gekennzeichnet, dass**
das Schaltelement (62) in der Koppelungsstellung (KS) und/oder in der Entkoppelungsstellung (ES) zumindest bereichsweise in eine radial innerhalb einer Verzahnung wenigstens eines der Zahnräder (42, 52) angeordnete Zahnradausnehmung (43) eingeführt ist und mit dem ersten Kupplungselement (44) in Eingriff ist.

11. Kraftfahrzeug (K) nach einem der vorhergehenden Ansprüche,
**dadurch gekennzeichnet, dass**
das Schaltelement (62) als Schaltschwinge oder als Schaltgabel ausgebildet ist.

## Claims

1. Motor vehicle (K) with at least one electric drive machine (10), for driving the motor vehicle (K), with at least one coupling transmission (20), which is switchable at least between a coupling position (KS), in which the electric drive machine (10) is coupled to a drive wheel (100) of the motor vehicle (K) in a torque-transmitting manner, and a decoupling position (ES), in which the electric drive machine (10) is decoupled from the drive wheel (100), and with a parking lock device (90), which comprises at least one parking lock element (92), which is displaceable between a parking lock position (P1), in which the at least one parking lock element (92) at least indirectly blocks a rotation of the drive wheel (100), and an unlocking position (P2), in which the at least one parking lock element (92) releases the rotation of the drive wheel (100), wherein the motor vehicle (K) comprises at least one actuating device (22) with an actuator (24), which is designed on the one hand for actuating a clutch (40) of the coupling transmission (20), which has at least one switching element (62), which serves for switching between the coupling position (KS) and the decoupling position (ES), and on the other hand is designed for displacing the at least one parking lock element (92) between the parking lock position (P1) and the unlocking position (P2), wherein the switching element (62) is configured such that it comprises a retention region (65), which prevents the at least one parking lock element (92) from being displaced into the parking lock position (P1) as long as no setting of the coupling position (KS) is present, wherein the actuator is designed for generating a rotational movement, by means of which both the clutch (40) can be actuated and the parking lock element (92) can be displaced, and
wherein the at least one actuating device (22) comprises an actuating element (26) adjustable by means of the actuator (24), which is designed on the one hand for exerting at least one switching force (F_SK) on the switching element (62) for actuating the clutch (40) and on the other hand for exerting at least one displacement force (F_VK), for displacing the at least one parking lock element (92) between the parking lock position (P1) and the unlocking position (P2),
**characterized in that**
the at least one actuating element (26) is coupled in a force-transmitting manner at least indirectly via a second spring element (28) of the actuating device (22) to an eccentric element (30) of the actuating device (30), by means of which the parking lock element (92) is displaceable between the parking lock position (P1) and the unlocking position (P2).

2. Motor vehicle (K) according to claim 1,
**characterized in that**
the actuating device (22) is designed to set a release state, in which the decoupling position (ES) is switched and at the same time the parking lock element (92) is kept displaced in the unlocking position (P2).

3. Motor vehicle (K) according to claim 1 or 2,
**characterized in that**
the actuating device (22) is designed to set a drive switching state, in which the coupling position (KS) is switched and at the same time the parking lock element (92) is kept displaced in the unlocking position (P2).

4. Motor vehicle (K) according to one of the preceding claims,
**characterized in that**
the actuating device (22) is designed to set a blocking switching state, in which the coupling position (KS) is switched and at the same time the parking lock element (92) is kept displaced in the parking lock position (P1).

5. Motor vehicle (K) according to one of the preceding claims,
**characterized in that**
the at least one actuating element (26) is coupled in a force-transmitting manner at least indirectly via a first spring element (27) of the actuating device (22) to the at least one switching element (62) of the clutch (40).

6. Motor vehicle (K) according to claim 5,
**characterized in that**
the actuating element (26) is rotatable by means of the actuator (24) in a direction of rotation (D1), whereby both the at least one switching force (F_SK) can be exerted via the first spring element (27) on the switching element (62) and the at least one displacement force (F_VK) can be exerted via the second spring element (28) on the eccentric element (30).

7. Motor vehicle (K) according to one of claims 5 or 6,
**characterized in that**
the actuating element (26) has a switching element stop (37), by means of which a movement of the switching element (62) relative to the actuating element (26) can be limited and/or the actuating element (26) has an eccentric element stop (38), by means of which a movement of the eccentric element (30) relative to the actuating element (26) can be limited.

8. Motor vehicle (K) according to one of the preceding claims,
**characterized in that**
the coupling transmission (20) comprises a first gear wheel (42), which is in at least indirect engagement with the drive machine (10), and a second gear wheel (52), which can be coupled to the first gear wheel (42) in a torque-transmitting manner by means of the clutch (40), which is coupled at least indirectly in a rotationally fixed manner to the drive wheel (100), wherein the clutch (40) comprises a first clutch element (44), which is coupled at least indirectly in a rotationally fixed manner via a second clutch element (54) of the clutch (40), which is connected in a rotationally fixed manner to the first gear wheel (42), to the first gear wheel (42), and wherein the clutch (40) comprises a connecting element (70), which is coupled on the one hand at least indirectly to the second gear wheel (52) and on the other hand can be coupled at least indirectly in a rotationally fixed manner to the first clutch element (44).

9. Motor vehicle (K) according to claim 8,
**characterized in that**
the clutch (40) comprises a locking element (80) for preventing the switching from the decoupling position (ES) to the coupling position (KS) in the event of a speed difference between the first gear wheel (42) and the second gear wheel (52) and for releasing a relative movement (RB) between the first clutch element (44) and the second clutch element (54), which effects the switching from the decoupling position (ES) to the coupling position (KS), in the event of speed equality between the first gear wheel (42) and the second gear wheel (52).

10. Motor vehicle (K) according to claim 8 or 9,
**characterized in that**
the switching element (62) in the coupling position (KS) and/or in the decoupling position (ES) is at least partially inserted into a gear wheel recess (43) arranged radially inside a toothing of at least one of the gear wheels (42, 52) and is in engagement with the first clutch element (44).

11. Motor vehicle (K) according to one of the preceding claims,
**characterized in that**
the switching element (62) is designed as a switching rocker or as a shift fork.

## Revendications

1. Véhicule automobile (K) avec au moins une machine d'entraînement électrique (10), pour entraîner le véhicule automobile (K), avec au moins une transmission de couplage (20), laquelle est commutable au moins entre une position de couplage (KS), dans laquelle la machine d'entraînement électrique (10) est couplée de manière à transmettre un couple à une roue motrice (100) du véhicule automobile (K), et une position de découplage (ES), dans laquelle la machine d'entraînement électrique (10) est découplée de la roue motrice (100), et avec un dispositif de blocage de stationnement (90), lequel comprend au moins un élément de blocage de stationnement (92), qui est déplaçable entre une position de blocage de stationnement (P1), dans laquelle ledit au moins un élément de blocage de stationnement (92) bloque au moins indirectement une rotation de la roue motrice (100), et une position de déverrouillage (P2), dans laquelle ledit au moins un élément de blocage de stationnement (92) libère la rotation de la roue motrice (100), dans lequel le véhicule automobile (K) comprend au moins un dispositif d'actionnement (22) avec un actionneur (24), lequel est conçu d'une part pour actionner un embrayage (40) de la transmission de couplage (20), qui comporte au moins un élément de commutation (62), qui sert à commuter entre la position de couplage (KS) et la position de découplage (ES), et d'autre part est conçu pour déplacer ledit au moins un élément de blocage de stationnement (92) entre la position de blocage de stationnement (P1) et la position de déverrouillage (P2), dans lequel l'élément de commutation (62) est configuré de telle sorte qu'il comprend une zone de retenue (65), laquelle empêche ledit au moins un élément de blocage de stationnement (92) de se déplacer dans la position de blocage de stationnement (P1) tant qu'aucun réglage de la position de couplage (KS) n'est présent, dans lequel l'actionneur est conçu pour générer un mouvement de rotation, au moyen duquel l'embrayage (40) peut être actionné et l'élément de blocage de stationnement (92) peut être déplacé, et dans lequel ledit au moins un dispositif d'actionnement (22) comprend un élément d'actionnement (26) ajustable au moyen de l'actionneur (24), lequel est conçu d'une part pour exercer au moins une force de commutation (F_SK) sur l'élément de commutation (62) pour actionner l'embrayage (40) et d'autre part pour exercer au moins une force de déplacement (F_VK), pour déplacer ledit au moins un élément de blocage de stationnement (92) entre la position de blocage de stationnement (P1) et la position de déverrouillage (P2),
**caractérisé en ce que**
ledit au moins un élément d'actionnement (26) est couplé de manière à transmettre une force au moins indirectement par l'intermédiaire d'un deuxième élément de ressort (28) du dispositif d'actionnement (22) à un élément excentrique (30) du dispositif d'actionnement (30), au moyen duquel l'élément de blocage de stationnement (92) est déplaçable entre la position de blocage de stationnement (P1) et la position de déverrouillage (P2).

2. Véhicule automobile (K) selon la revendication 1,
**caractérisé en ce que**
le dispositif d'actionnement (22) est conçu pour régler un état de libération, dans lequel la position de découplage (ES) est commutée et en même temps l'élément de blocage de stationnement (92) est maintenu déplacé dans la position de déverrouillage (P2).

3. Véhicule automobile (K) selon la revendication 1 ou 2,
**caractérisé en ce que**
le dispositif d'actionnement (22) est conçu pour régler un état de commutation d'entraînement, dans lequel la position de couplage (KS) est commutée et en même temps l'élément de blocage de stationnement (92) est maintenu déplacé dans la position de déverrouillage (P2).

4. Véhicule automobile (K) selon l'une des revendications précédentes,
**caractérisé en ce que**
le dispositif d'actionnement (22) est conçu pour régler un état de commutation de blocage, dans lequel la position de couplage (KS) est commutée et en même temps l'élément de blocage de stationnement (92) est maintenu déplacé dans la position de blocage de stationnement (P1).

5. Véhicule automobile (K) selon l'une des revendications précédentes,
**caractérisé en ce que**
ledit au moins un élément d'actionnement (26) est couplé de manière à transmettre une force au moins indirectement par l'intermédiaire d'un premier élément de ressort (27) du dispositif d'actionnement (22) audit au moins un élément de commutation (62) de l'embrayage (40).

6. Véhicule automobile (K) selon la revendication 5,
**caractérisé en ce que**
l'élément d'actionnement (26) est rotatif au moyen de l'actionneur (24) dans un sens de rotation (D1), moyennant quoi ladite au moins une force de commutation (F_SK) peut être exercée par l'intermédiaire du premier élément de ressort (27) sur l'élément de commutation (62) et ladite au moins une force de déplacement (F_VK) peut être exercée par l'intermédiaire du deuxième élément de ressort (28) sur l'élément excentrique (30).

7. Véhicule automobile (K) selon l'une des revendications 5 ou 6,
**caractérisé en ce que**
l'élément d'actionnement (26) présente une butée d'élément de commutation (37), au moyen de laquelle un mouvement de l'élément de commutation (62) par rapport à l'élément d'actionnement (26) peut être limité et/ou l'élément d'actionnement (26) présente une butée d'élément excentrique (38), au moyen de laquelle un mouvement de l'élément excentrique (30) par rapport à l'élément d'actionnement (26) peut être limité.

8. Véhicule automobile (K) selon l'une des revendications précédentes,
**caractérisé en ce que**
la transmission de couplage (20) comprend une première roue dentée (42), laquelle est en prise au moins indirecte avec la machine d'entraînement (10), ainsi qu'une deuxième roue dentée (52), laquelle peut être couplée de manière à transmettre un couple à la première roue dentée (42) au moyen de l'embrayage (40), laquelle est couplée au moins indirectement de manière solidaire en rotation à la roue motrice (100), dans lequel l'embrayage (40) comprend un premier élément d'embrayage (44), lequel est couplé au moins indirectement de manière solidaire en rotation par l'intermédiaire d'un deuxième élément d'embrayage (54) de l'embrayage (40), qui est relié de manière solidaire en rotation à la première roue dentée (42), à la première roue dentée (42), et dans lequel l'embrayage (40) comprend un élément de liaison (70), lequel est couplé d'une part au moins indirectement à la deuxième roue dentée (52) et d'autre part peut être couplé au moins indirectement de manière solidaire en rotation au premier élément d'embrayage (44).

9. Véhicule automobile (K) selon la revendication 8,
**caractérisé en ce que**
l'embrayage (40) comprend un élément de blocage (80) pour empêcher la commutation de la position de découplage (ES) à la position de couplage (KS) en cas de différence de vitesse de rotation entre la première roue dentée (42) et la deuxième roue dentée (52) et pour libérer un mouvement relatif (RB) entre le premier élément d'embrayage (44) et le deuxième élément d'embrayage (54), qui effectue la commutation de la position de découplage (ES) à la position de couplage (KS), en cas d'égalité de vitesse de rotation entre la première roue dentée (42) et la deuxième roue dentée (52).

10. Véhicule automobile (K) selon la revendication 8 ou 9,
**caractérisé en ce que**
l'élément de commutation (62) dans la position de couplage (KS) et/ou dans la position de découplage (ES) est au moins partiellement inséré dans un évidement de roue dentée (43) disposé radialement à l'intérieur d'une denture d'au moins une des roues dentées (42, 52) et est en prise avec le premier élément d'embrayage (44).

11. Véhicule automobile (K) selon l'une des revendications précédentes,
**caractérisé en ce que**
l'élément de commutation (62) est conçu comme un basculeur de commutation ou comme une fourchette de commutation.
